(19) Europäisches Patentamt
European Patent Office
Office européen des brevets

(11) **EP 4 626 009 A1**

(12) **EUROPEAN PATENT APPLICATION**
published in accordance with Art. 153(4) EPC

(43) Date of publication:
01.10.2025 Bulletin 2025/40

(21) Application number: 23894229.6

(22) Date of filing: 04.09.2023

(51) International Patent Classification (IPC):
*H04N 23/60* (2023.01)  *G01M 3/38* (2006.01)
*G01N 21/27* (2006.01)  *G01N 21/3504* (2014.01)
*G03B 5/00* (2021.01)  *G03B 15/00* (2021.01)
*G03B 17/02* (2021.01)  *G06T 7/00* (2017.01)
*H04N 23/63* (2023.01)

(52) Cooperative Patent Classification (CPC):
G01M 3/38; G01N 21/27; G01N 21/3504;
G03B 5/00; G03B 15/00; G03B 17/02; G06T 7/00;
H04N 23/60; H04N 23/63

(86) International application number:
PCT/JP2023/032198

(87) International publication number:
WO 2024/111214 (30.05.2024 Gazette 2024/22)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 22.11.2022 JP 2022186679

(71) Applicant: KONICA MINOLTA, INC.
Tokyo 100-7015 (JP)

(72) Inventors:
• **KIUCHI, Mikako**
**Chiyoda-ku, Tokyo 100-7015 (JP)**
• **SUZUKI, Akihiro**
**Chiyoda-ku, Tokyo 100-7015 (JP)**

(74) Representative: **Gille Hrabal
Partnerschaftsgesellschaft mbB
Patentanwälte
Brucknerstraße 20
40593 Düsseldorf (DE)**

(54) **IMAGE CAPTURING DEVICE, IMAGE CAPTURING METHOD, AND COMPUTER PROGRAM**

(57) To provide an image capturing device for detecting gas, solid particulates, or liquid particulates floating in a space, in which an object being captured can be visually recognized even in a case where a camera shake amount is large. The image capturing device includes a visible light camera 110, an infrared camera 120, a monitor 108, an image generation unit 154 that generates a detected image representing gas or the like based on an image generated by the camera, a blur amount calculation unit 152 that acquires an index value of shaking of the infrared camera 120, a blur determination unit 155 that determines whether or not the index value acquired is within a predetermined range, and an integrated control unit 151 that executes control to display a captured image captured by the visible light camera 110 and including a whole or a part of a capturing target or a processed image generated based on the captured image in a case where the index value acquired does not fall within the predetermined range, and executes control to display the detected image in a case where the index value acquired is within the predetermined range.

FIG. 1

**Description**

Technical Field

The present disclosure relates to a technique of detecting gas using an image.

Background Art

When gas leakage occurs, the temperature slightly changes in a space in which the leaked gas is floating. A technique of employing this principle and detecting gas using an image generated by capturing with a camera is known.

During capturing of a monitoring target, for example, a place where gas transport pipes are connected to each other by an infrared camera, camera shaking may occur because the camera shakes. As a result, the infrared image captured by the camera includes noise due to camera shaking, and thus gas detection accuracy decreases.

In order to handle this problem, Patent Literature 1 discloses a device that performs image processing on a plurality of images arranged in time series captured by a camera, and the device includes a first calculation unit that calculates, for the plurality of images, a value indicating a spatial change in pixel data and a value indicating a temporal change in the pixel data and a second calculation unit that performs statistical processing on the value indicating the spatial change and the value indicating the temporal change, which are calculated by the first calculation unit, to calculate a value indicating a blur of each of the plurality of images caused by camera shaking, and the device corrects the image using the calculated value indicating the blur. Noise can be removed, and thus the gas detection accuracy can be improved.

Citation List

Patent Literature

Patent Literature 1: JP 6838605 B
Patent Literature 2: JP 6245418 B

Summary of Invention

Technical Problem

As described above, although the blur can be corrected, for example, in a case where the camera shake amount is large as in a case where the camera is moved by being held with the hand, there is a problem that a corrected image is disturbed and it is difficult to know where the camera has captured.

In order to solve this problem, an object of the present disclosure is to provide an image capturing device, an image capturing method, and a computer program capable of visually recognizing an object being captured even in a case where a camera shake amount is large.

Solution to Problem

In order to achieve the above object, one aspect of the present disclosure is an image capturing device used to detect gas, solid particulates, or liquid particulates floating in a space, the image capturing device including a capturing unit, a display unit, an image generation unit that detects presence of gas, solid particulates, or liquid particulates based on an image generated by the capturing unit and generates a detected image representing gas, solid particulates, or liquid particulates detected, an acquisition unit that acquires an index value indexing shaking of the capturing unit at a time of capturing, a determination unit that determines whether or not an index value acquired is within a predetermined range, and a display control unit that executes control to display, on the display unit, a captured image that is captured by the capturing unit and includes a whole or a part of a capturing target or a processed image generated based on the captured image in a case where it is determined that the index value does not fall within the predetermined range, and executes control to display the detected image on the display unit in a case where it is determined that the index value acquired is within the predetermined range.

In a case where the image capturing device detects gas, the capturing unit may include an infrared capturing unit that generates an infrared image.

In a case where the image capturing device detects solid particulates or liquid particulates, the capturing unit may include a visible-light capturing unit that generates a visible light image.

In a case where the image capturing device detects gas, solid particulates, or liquid particulates, the capturing unit may include an infrared capturing unit that generates an infrared image and a visible-light capturing unit that generates a visible light image.

The capturing unit may include an infrared capturing unit that generates an infrared image, the infrared image generated may represent a temperature distribution of a capturing target surface, the image capturing device may further include a conversion unit that converts a temperature of each part in the temperature distribution into color information to generate a color image representing a color distribution in a capturing target, and the display control unit may execute control to display the color image as the processed image.

In a case where the image capturing device detects gas, solid particulates, or liquid particulates, the capturing unit may include a visible-light capturing unit that generates a visible light image and an infrared capturing unit that generates an infrared image, the image generation unit may generate the detected image based on the visible light image or the infrared image, the image capturing device may further include a superimposition unit that superimposes the visible light image generated or the infrared image generated and the detected image generated to generate a superimposed image, and the display control unit may execute control to display the superimposed image as the processed image.

The capturing unit may generate a first image at a first time point, and may generate a second image at a second time point after the first time point, and the image generation unit may generate a difference image between the first image and the second image as the detected image.

In a case where the image capturing device detects gas, the capturing unit may be an infrared capturing unit that generates an infrared image, the infrared capturing unit may generate a first infrared image as the first image at the first time point, and may generate a second infrared image as the second image at the second time point, and the image generation unit may generate a difference image between the first infrared image and the second infrared image as the detected image.

In a case where the image capturing device detects water vapor, solid particulates, or liquid particulates, the capturing unit may be a visible-light capturing unit that generates a visible light image, the visible-light capturing unit may generate a first visible light image as the first image at the first time point, and may generate a second visible light image as the second image at the second time point, and the image generation unit may generate a difference image between the first visible light image and the second visible light image as the detected image.

The capturing unit may generate moving image data with a structure in which a plurality of frame images are arranged in time series, data obtained by arranging pixel data of pixels at same pixel positions in a plurality of the frame images in time series may be defined as time-series pixel data, and the image generation unit may calculate, for each of a plurality of pieces of the time-series data constituting the moving image data, a standard deviation or a variance in units of a predetermined number of frame images smaller in number than a number of a plurality of the frame images, and may generate the detected image using the standard deviation or variance detected.

In a case where the image capturing device detects gas, the capturing unit may be an infrared capturing unit that generates an infrared frame image, the infrared capturing unit may generate the moving image data with a structure in which a plurality of infrared frame images are arranged in time series, data obtained by arranging pixel data of pixels at same pixel positions in a plurality of the infrared frame images in time series may be defined as the time-series pixel data, and the image generation unit may calculate, for each of a plurality of pieces of the time-series data constituting the moving image data, a standard deviation or a variance in units of a predetermined number of infrared frame images smaller in number than a number of a plurality of the infrared frame images, and may generate the detected image using the standard deviation or variance detected.

In a case where the image capturing device detects water vapor, solid particulates, or liquid particulates, the capturing unit may be a visible-light capturing unit that generates a visible-light frame image, the visible-light capturing unit may generate the moving image data with a structure in which a plurality of visible-light frame images are arranged in time series, data obtained by arranging pixel data of pixels at same pixel positions in a plurality of the visible-light frame images in time series may be defined as the time-series pixel data, and the image generation unit may calculate, for each of a plurality of pieces of the time-series data constituting the moving image data, a standard deviation or a variance in units of a predetermined number of visible-light frame images smaller in number than a number of a plurality of the visible-light frame images, and may generate the detected image using the standard deviation or variance detected.

The image capturing device may further include a blur correction unit that corrects a blur in an image generated by the capturing unit using an index value acquired by the acquisition unit to generate a corrected image, and the image generation unit may generate the detected image, the captured image, or the processed image from the corrected image generated.

The capturing unit may generate a first image at a first time point, the blur correction unit may generate a second image aligned with the first image, in which a blur is corrected, at a second time point after the first time point, the acquisition unit may calculate, as the index value, a degree of matching between the first image generated and the second image generated, the predetermined range may correspond to a predetermined threshold or more, the determination unit may determine whether or not a calculated degree of matching is equal to or larger than the predetermined threshold, and in a case where it is determined that the calculated degree of matching is less than the predetermined threshold, the display control unit may execute control to display the captured image or the processed image.

The image capturing device may further include an angular velocity sensor that measures a rotation angular velocity of the capturing unit, the acquisition unit may calculate, as the index value, a blur amount indicating shaking of the capturing unit using a rotation angular velocity measured by the angular velocity sensor, the predetermined range may correspond to less than a predetermined threshold, the determination unit may determine whether or not the blur amount calculated is less than the predetermined threshold, and in a case where it is determined that the blur amount calculated is equal to or larger than the predetermined threshold, the display control unit may execute control to display the captured image or the processed image.

Another aspect of the present disclosure is an image capturing method used in an image capturing device used to detect gas, solid particulates, or liquid particulates floating in a space and including a capturing unit and a display unit, the image capturing method including an image generation step of detecting presence of gas, solid particulates, or liquid particulates based on an image generated by the capturing unit and generating a detected image representing gas, solid particulates, or liquid particulates detected, an acquisition step of acquiring an index value indexing shaking of the capturing unit at a time of capturing, a determination step of determining whether or not the index value acquired is within a predetermined range, and a display control step of executing control to display, on the display unit, a captured image that is captured by the capturing unit and includes a whole or a part of a capturing target or a processed image generated based on the captured image in a case where it is determined that the index value does not fall within the predetermined range, and executing control to display the detected image on the display unit in a case where it is determined that the index value acquired is within the predetermined range.

Yet another aspect of the present disclosure is a computer program for control used in an image capturing device used to detect gas, solid particulates, or liquid particulates floating in a space and including a capturing unit and a display unit, the computer program causing the image capturing device, which is a computer, to perform an image generation step of detecting presence of gas, solid particulates, or liquid particulates based on an image generated by the capturing unit and generating a detected image representing gas, solid particulates, or liquid particulates detected, an acquisition step of acquiring an index value indexing shaking of the capturing unit at a time of capturing, a determination step of determining whether or not the index value acquired is within a predetermined range, and a display control step of executing control to display, on the display unit, a captured image that is captured by the capturing unit and includes a whole or a part of a capturing target or a processed image generated based on the captured image in a case where it is determined that the index value does not fall within the predetermined range, and executing control to display the detected image on the display unit in a case where it is determined that the index value acquired is within the predetermined range.

Advantageous Effects of Invention

With the above configuration, the present disclosure has an effect that the object being captured can be visually recognized even in a case where the camera shake amount is large.

Brief Description of Drawings

Fig. 1 is a block diagram illustrating a configuration of a gas detection device 10.
Fig. 2 is an explanatory diagram for explaining the relationship between a value indicating a spatial change in a pixel value caused by infrared camera shaking occurring between a current infrared frame image and a next infrared frame image and a value indicating a temporal change in the pixel value.
Fig. 3 is a graph illustrating the relationship between a value indicating a change in the x-axis direction of the pixel value and a value indicating the temporal change in the pixel value for each of all the pixels constituting the next infrared frame image. Fig. 3(a) illustrates a case where only the infrared camera shaking occurs and there is no change in a subject. Fig. 3(b) illustrates a case where the infrared camera shaking and the change in the subject occur. Fig. 3(c) illustrates a case where the infrared camera shaking is removed.
Fig. 4 is a graph 401 illustrating a temperature change at a spot SP1.
Fig. 5 is a graph 411 illustrating a temperature change at a spot SP2.
Fig. 6 illustrates time-series pixel data.
Fig. 7 is a flowchart illustrating an operation in the gas detection device 10.
Fig. 8 illustrates a first frame image 501 and a second frame image 511 when a detected frame image is generated by a gas enhancement method using a difference.
Fig. 9(a) illustrates a detected frame image 601 generated by a gas enhancement method as an example of the detected frame image. Fig. 9(b) illustrates a detected frame image 602 generated by the gas enhancement method using a difference as an example of the detected frame image.

Fig. 10(a) illustrates a detected frame image 631 generated by the gas enhancement method as another example of the detected frame image, in a case where the blur amount is within a correctable range. Fig. 10(b) illustrates a detected frame image 632 generated by the gas enhancement method as another example of the detected frame image, in a case where the blur amount is outside the correctable range.

Fig. 11(a) illustrates a detected frame image 633 generated by the gas enhancement method using a difference as yet another example of the detected frame image, in a case where the blur amount is within the correctable range. Fig. 11(b) illustrates a detected frame image 634 generated by the gas enhancement method using a difference as yet another example of the detected frame image, in a case where the blur amount is outside the correctable range.

Fig. 12(a) illustrates an infrared frame image 641 as an example of a captured frame image. Fig. 12(b) illustrates a visible-light frame image 642 as an example of the captured frame image.

Fig. 13(a) illustrates a temperature frame image 643 generated by converting temperature into color using a temperature-color conversion map as an example of a processed frame image. Fig. 13(b) illustrates a superimposed frame image 644 generated by superimposing the visible-light frame image and the detected frame image generated by the gas enhancement method at 1:1. Fig. 13(c) illustrates a superimposed frame image 645 generated by superimposing the visible-light frame image and the detected frame image generated by the gas enhancement method using a difference at 1:1.

Fig. 14(a) illustrates an infrared detected frame image 651 generated by the gas enhancement method in a case where capturing is performed in a stationary state in a comparative example. Fig. 14(b) illustrates an infrared detected frame image 652 generated by the gas enhancement method in a case where a user performs capturing while walking in the comparative example. Fig. 14(c) illustrates an infrared detected frame image 653 generated by the gas enhancement method in a case where capturing is performed in a stationary state in the comparative example.

Fig. 15(a) illustrates an infrared detected frame image 661 generated by the gas enhancement method in a case where capturing is performed in a stationary state in an example. Fig. 15(b) illustrates a visible-light frame image 662 in a case where the user performs capturing while walking in the example. Fig. 15(c) illustrates an infrared detected frame image 663 generated by the gas enhancement method in a case where capturing is performed in a stationary state in the example.

Description of Embodiments

1. Gas Detection Device 10

A gas detection device 10 as one embodiment according to the present disclosure will be described.

The gas detection device 10 is a device that detects the occurrence of gas leakage or the like from a monitoring target such as a gas transport pipe. The gas detection device 10 is a portable device, and the user holds the gas detection device 10 by the hand and captures the monitoring target while walking, thereby detecting gas, solid particulates, or liquid particulates floating in the space.

The gas detection device 10 captures a gas leakage monitoring target and in a case where gas leakage occurs from the monitoring target, generates a detected frame image representing gas, solid particulates, or liquid particulates floating in the space using an infrared image generated by capturing with the infrared camera included in the gas detection device 10, and displays the detected frame image. In a case where the shake amount of the infrared camera included in the gas detection device 10 is large, a visible-light frame image generated by capturing with a visible light camera included in the gas detection device 10 is displayed instead of the detected frame image such that the user can visually recognize the object being captured.

Here, a specific example of the gas is water vapor (invisible to the naked eye). A specific example of the liquid particulates is steam (which appears white to the naked eye). A specific example of the solid particulates is smoke.

1.1 Configuration of Gas Detection Device 10

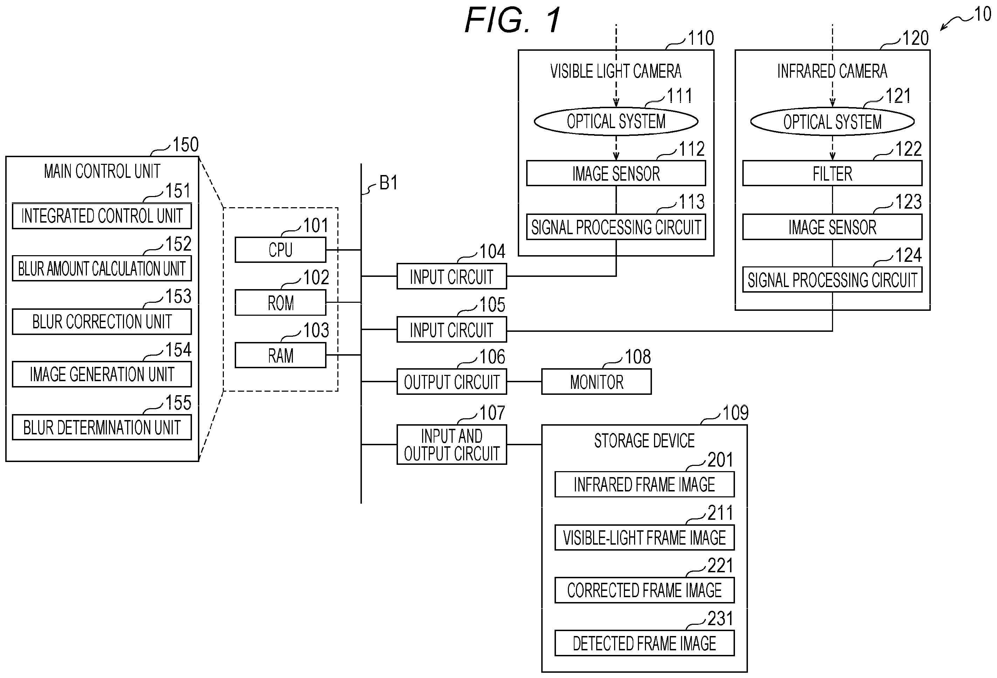

As illustrated in Fig. 1, the gas detection device 10 (image capturing device) includes a central processing unit (CPU) 101, a read only memory (ROM) 102, a random access memory (RAM) 103, an input circuit 104, an input circuit 105, an output circuit 106, an input and output circuit 107, a visible light camera 110 connected to the input circuit 104, an infrared camera 120 connected to the input circuit 105, a monitor 108 connected to the output circuit 106, and a storage device 109 connected to the input and output circuit 107, which are mutually connected to a bus B1.

The visible light camera 110 (capturing unit) and the infrared camera 120 (capturing unit) constitute a capturing unit. The visible light camera 110 and the infrared camera 120 receive different wavelength bands.

(1) CPU 101, ROM 102, and RAM 103

The RAM 103 includes a semiconductor memory, and provides a work area when the CPU101 executes a program.

The ROM 102 includes a nonvolatile semiconductor memory. The ROM102 stores a control program that is a computer program for performing processing in the gas detection device 10, and the like.

The CPU 101 is a processor that operates in accordance with the control program stored in the ROM 102.

By the CPU 101 operating in accordance with the control program stored in the ROM 102 using the RAM 103 as a work area, the CPU 101, the ROM 102, and the RAM 103 constitute a main control unit 150.

(2) Visible Light Camera 110 and Input Circuit 104

The visible light camera 110 (visible-light capturing unit) receives a wavelength band of visible light, captures the entire gas leakage monitoring target and its background (capturing target, subject), and generates a visible-light moving image.

The visible light camera 110 includes an optical system 111, an image sensor 112, and a signal processing circuit 113.

The optical system 111 forms a visible light image of the subject on the image sensor 112. The image sensor 112 receives visible light having passed through the optical system 111. The signal processing circuit 113 converts an analog signal output from the image sensor 112 into a digital signal, and performs image processing on the digital signal to generate a visible-light frame image. The signal processing circuit 113 outputs the generated visible-light frame image to the input circuit 104 every time the visible-light frame image is generated.

The visible light camera 110 consecutively performs capturing, and thus generates a plurality of visible-light frame images. For example, the visible light camera 110 generates 30 visible-light frame images per second. The plurality of visible-light frame images constitute a moving image.

The input circuit 104 receives the visible-light frame image from the visible light camera 110 as needed, and writes the received visible-light frame image into the storage device 109 via the bus B1 and the input and output circuit 107.

As described above, the visible-light moving image includes a plurality of visible-light frame images, and each visible-light frame image includes a plurality of pixels arranged in a matrix. The pixel value of each pixel indicates luminance.

(3) Infrared Camera 120 and Input Circuit 105

The infrared camera 120 (infrared capturing unit) selectively transmits infrared light in a wavelength band absorbed by gas to be detected, captures the gas leakage monitoring target and its background, and generates a moving image of infrared images.

The infrared camera 120 includes an optical system 121, a filter 122, an image sensor 123, and a signal processing circuit 124.

The filter 122 is disposed between the optical system 121 and the image sensor 123, and selectively transmits infrared light in a wavelength band to be absorbed by the gas to be detected in the light having passed through the optical system 121. Among the infrared wavelength bands, the wavelength band to be passed through the filter 122 depends on the type of the gas to be detected. For example, in the case of methane, a filter that passes a wavelength band of 3.2 $\mu$m to 3.4 $\mu$m is used.

The optical system 121 forms an infrared image of the capturing target (monitoring target and its background) on the image sensor 123. The image sensor 123 is, for example, a cooled indium antimonide (InSb) image sensor, and receives infrared light having passed through the filter 122.

The signal processing circuit 124 converts an analog signal output from the image sensor 123 into a digital signal, and performs image processing on the digital signal to generate an infrared image frame. The signal processing circuit 124 outputs the generated infrared image frame to the input circuit 105 every time the infrared image frame is generated.

The infrared camera 120 consecutively performs capturing, and thus generates a plurality of infrared frame images. For example, the infrared camera 120 generates 30 infrared frame images per second. The plurality of infrared frame images constitute an infrared moving image.

Note that the infrared camera 120 may detect not only methane but also hydrocarbon gases such as propane and butane. In the case of hydrocarbon gases such as propane and butane, a filter that passes a wavelength band based on these gases is used.

The input circuit 105 receives the infrared image frame from the infrared camera 120 as needed, and writes the received infrared image frame into the storage device 109 via the bus B1 and the input and output circuit 107.

As described above, the infrared moving image includes a plurality of infrared frame images, and each infrared frame image includes a plurality of pixels arranged in a matrix. The pixel value of each pixel indicates luminance. Each pixel value means, for example, temperature information indicating temperature.

(4) Storage Device 109 and Input and Output Circuit 107

The storage device 109 includes, for example, a hard disk drive.
As illustrated in Fig. 1, the storage device 109 has a region for storing, for example, an infrared frame image 201, a visible-light frame image 211, a corrected frame image 221 to be described later, and a detected frame image 231 to be described later.
The input and output circuit 107 executes control to write the infrared frame image 201, the visible-light frame image 211, the corrected frame image 221, or the detected frame image 231 into the storage device 109 under the control of an integrated control unit 151 to be described later. In addition, under the control of the integrated control unit 151, the input and output circuit 107 executes control to read the infrared frame image 201, the visible-light frame image 211, the corrected frame image 221, or the detected frame image 231 stored in the storage device 109.

(5) Monitor 108 and Output Circuit 106

The monitor 108 (display unit) is, for example, a liquid crystal display. The monitor 108 receives a visible-light frame image, a detected frame image, or the like from the output circuit 106, and displays the received visible-light frame image, detected frame image, or the like.
Under the control of the integrated control unit 151, the output circuit 106 executes control to output and display the visible-light frame image, the infrared frame image, or the like read from the storage device 109 on the monitor 108.

(6) Main Control Unit 150

By the CPU 101 operating in accordance with the control program stored in the ROM 102 using the RAM 103 as a work area, the main control unit 150 configures the integrated control unit 151, a blur amount calculation unit 152, a blur correction unit 153, an image generation unit 154, and a blur determination unit 155.

(a) Integrated Control Unit 151

The integrated control unit 151 integrally controls the entire gas detection device 10.
The integrated control unit 151 also controls integrally the blur amount calculation unit 152, the blur correction unit 153, the image generation unit 154, and the blur determination unit 155.
In a case where the blur determination unit 155 determines that the blur amount (index value) is within a correctable range (predetermined range), the integrated control unit 151 (display control unit) executes control to output a detected frame image to the monitor 108 via the output circuit 106 and display the detected frame image on the monitor 108. For example, the detected frame image (detected image) is generated by the image generation unit 154 using a gas enhancement method to be described later.
That is, the image generation unit 154 detects the presence of gas, solid particulates, or liquid particulates on the basis of the frame image generated by the infrared camera 120 or the visible light camera 110, and generates a detected frame image representing the detected gas, solid particulates, or liquid particulates. In a case where it is determined that the blur amount (index value) is within the correctable range (predetermined range), the integrated control unit 151 (display control unit) executes control to display the detected frame image.
On the other hand, in a case where the blur determination unit 155 determines that the blur amount does not fall within the correctable range, the integrated control unit 151 executes control to output a captured frame image (captured image) representing the entire capturing target to the monitor 108 via the output circuit 106 and display the captured frame image on the monitor 108. Note that, in this case, the integrated control unit 151 may execute control to cut out a part of the captured frame image from the captured frame image, output the cut-out part of the captured frame image to the monitor 108, and display the part of the captured frame image on the monitor 108. A part of the captured frame image represents a part of the capturing target.
An example of the captured frame image is a visible-light frame image (visible light image) generated by the visible light camera 110. The captured frame image (captured image) includes the entire capturing target.
As described above, in a case where the gas detection device 10 detects gas, the infrared camera 120 (infrared capturing unit) selectively transmits infrared light in a wavelength band absorbed by gas to be detected to generate an infrared frame image, and the visible light camera 110 (visible-light capturing unit) receives a wavelength band of visible light to generate a visible-light frame image. The integrated control unit 151 (display control unit) executes control to display the visible-light frame image as a captured frame image.

Note that the integrated control unit 151 executes control to display the visible-light frame image in a case where the blur determination unit 155 determines that the blur amount does not fall within the correctable range. However, it is not limited thereto.

The integrated control unit 151 may execute control to display a second infrared frame image as the captured frame image in a case where the blur determination unit 155 determines that the blur amount does not fall within the correctable range. That is, in a case where the gas detection device 10 detect gas, the infrared camera 120 (first infrared capturing unit) selectively transmits infrared light in a wavelength band absorbed by gas to be detected to generate an infrared frame image. The gas detection device 10 may include a second infrared camera (second infrared capturing unit) different from infrared camera 120, instead of the visible light camera 110. The second infrared camera receives, for example, the entire wavelength band of infrared light to generate the second infrared frame image. The integrated control unit 151 (display control unit) executes control to display the second infrared frame image as a captured image. The second infrared frame image is not subjected to processing performed by the image generation unit 154.

In a case where the gas detection device 10 detects gas, the visible light camera 110 may receive the wavelength band of visible light to generate a visible-light frame image, and the infrared camera 120 may selectively transmit infrared light in a wavelength band absorbed by the gas to be detected to generate an infrared frame image. The image generation unit 154 may detect the presence of gas from the infrared frame image generated by the infrared camera 120 and generate a detected frame image representing the detected gas. The integrated control unit 151 (superimposition unit) may superimpose the generated visible-light frame image and the generated detected frame image to generate a superimposed frame image. In a case where it is determined that the blur amount (index value) does not fall within the correctable range (predetermined range), the integrated control unit 151 (superimposition unit) may execute control to display the superimposed frame image as a processed frame image.

In a case where the gas detection device 10 detects gas, solid particulates, or liquid particulates, the visible light camera 110 may generate a visible-light frame image (visible light image), and the infrared camera 120 may generate an infrared frame image (infrared image). The image generation unit 154 may generate a detected frame image (detected image) on the basis of the visible-light frame image or the infrared frame image. The integrated control unit 151 (superimposition unit) may superimpose the generated visible-light frame image or infrared frame image and the generated detected frame image, thereby generating a superimposed frame image (superimposed image). The integrated control unit 151 (display control unit) may execute control to display the superimposed frame image as the processed frame image (processed image).

In a case where the blur determination unit 155 determines that the blur amount does not fall within the correctable range, the integrated control unit 151 (superimposition unit) may superimpose the visible-light frame image (visible light image) and the detected frame image (detected image) generated by the gas enhancement method at 1:1, thereby generating a superimposed image as the processed frame image. The integrated control unit 151 may execute control to display the generated superimposed image as the processed frame image (processed image). In this case, the superimposition ratio is not limited to 1:1. Other ratios may be used.

In a case where the blur determination unit 155 determines that the blur amount does not fall within the correctable range, the integrated control unit 151 (superimposition unit) may superimpose the visible-light frame image and a detected frame image generated by a gas enhancement method using a difference to be described later at 1:1, thereby generating a superimposed image as the processed frame image. The integrated control unit 151 may execute control to display the superimposed image as the processed frame image. Note that the superimposition ratio is not limited to 1:1. Other ratios may be used.

(b) Blur Amount Calculation Unit 152

Using the infrared frame image captured by the infrared camera 120, the blur amount calculation unit 152 (acquisition unit) calculates, as an index value, a signal change Ns due to shaking of the infrared camera 120 (that is, noise caused by the shaking of the infrared camera 120, in other words, an index value indexing the shaking of the infrared camera 120 at the time of capturing). That is, the blur amount calculation unit 152 acquires the index value. Note that the processing of the blur amount calculation unit 152 is described in detail in Patent Literature 1.

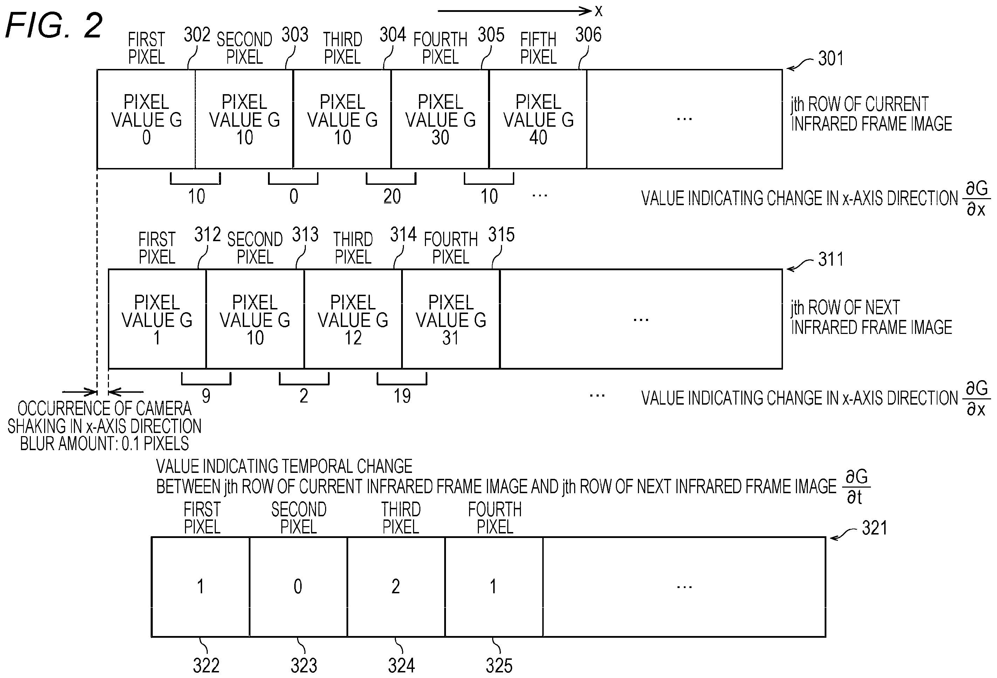

Fig. 2 is an explanatory diagram for explaining the relationship between a value indicating a spatial change in a pixel value G caused by the shaking of the infrared camera 120 occurring between a current infrared frame image and a next infrared frame image and a value indicating a temporal change in the pixel value G.

An infrared frame image is one still image constituting an infrared moving image. In the present embodiment, the infrared moving image will be described as an example of a plurality of infrared frame images arranged in time series generated by capturing with the infrared camera 120.

The pixel value G is an example of pixel data of a pixel. The pixel data is numerical information of a pixel, and means, for example, the pixel value G or a temperature calculated using the pixel value G in the case of the infrared frame image.

As illustrated in Fig. 2, in the current infrared frame image, a first pixel 302 to a fifth pixel 306 located in a jth row (301) are illustrated, and pixels after the fifth pixel are omitted. In the next infrared frame image, a first pixel 312 to a fourth pixel 315 located in the jth row (311) are illustrated, and the pixels after the fourth pixel are omitted. The direction in which the pixels in the jth row (301, 311) are arranged is defined as the x-axis direction.

A value ($\partial G/\partial x$) indicating a change in the x-axis direction of the pixel value G is an example of a value indicating a spatial change in the pixel value G (pixel data) in one infrared frame image. The pixel value G indicates luminance. In the jth row (301) of the current infrared frame image, the pixel value G gradually increases from the first pixel 302 toward the fifth pixel 306. This means that the subject is gradually brighter from the first pixel 302 toward the fifth pixel 306.

It is assumed that shaking of the infrared camera 120 occurs in the positive direction of the x axis between the current infrared frame image and the next infrared frame image without changing the subject. Since the subject is gradually brighter from the first pixel 302 toward the fifth pixel 306, the pixel value G of an Nth pixel in the next infrared frame image is considered to be equal to or larger than the pixel value G of an Nth pixel in the current infrared frame image. For example, it is considered that the pixel value G of the first pixel 312 in the next infrared frame image is equal to or larger than the pixel value G of the first pixel 302 in the current infrared frame image.

How much the pixel value G of the Nth pixel in the next infrared frame image is larger than the pixel value G of the Nth pixel in the current infrared frame image will be examined. It is assumed that a blur with a blur amount of +0.1 occurs between the current infrared frame image and the next infrared frame image due to the shaking of the infrared camera 120. The blur amount is an example of a value indicating the blur of the frame image caused by the shaking of the infrared camera 120.

When the blur amount is within one pixel, it can be considered that the change amount of the pixel value G and the blur amount are directly proportional to each other. Therefore, in a case where the blur amount is +0.1 pixels, the pixel value G is considered to change as follows.

The pixel value G of the first pixel 302 in the current infrared frame image is 0. In the current infrared frame image, the value ($\partial G/\partial x$) indicating the change in the x-axis direction of the pixel value G between the first pixel 302 and the second pixel 303 is 10. Therefore, in the next infrared frame image, the pixel value G of the first pixel 312 is 1 (= 0 + 0.1 × 10).

The pixel value G of the second pixel 303 in the current infrared frame image is 10. In the current infrared frame image, the value ($\partial G/\partial x$) indicating the change in the x-axis direction of the pixel value G between the second pixel 303 and the third pixel 304 is 0. Therefore, in the next infrared frame image, the pixel value G of the second pixel 313 is 10 (= 10 + 0.1 × 0).

The pixel value G of the third pixel 304 in the current infrared frame image is 10. In the current infrared frame image, the value ($\partial G/\partial x$) indicating the change in the x-axis direction of the pixel value G between the third pixel 304 and the fourth pixel 305 is 20. Therefore, in the next infrared frame image, the pixel value G of the third pixel 314 is 12 (= 10 + 0.1 × 20).

The pixel value G of the fourth pixel 305 in the current infrared frame image is 30. In the current infrared frame image, the value ($\partial G/\partial x$) indicating the change in the x-axis direction of the pixel value G between the fourth pixel 305 and the fifth pixel 306 is 10. Therefore, in the next infrared frame image, the pixel value G of the fourth pixel 315 is 31 (= 30 + 0.1 × 10).

Next, the value indicating a temporal change in the pixel value G (pixel data) in two consecutive infrared frame images will be described.

In the current infrared frame image and the next infrared frame image (that is, in two consecutive infrared frame images), the value (322) ($\partial G/\partial t$) indicating the temporal change in the pixel value G of the first pixel is 1 (= 1 - 0), the value (323) ($\partial G/\partial t$) indicating the temporal change in the pixel value G of the second pixel is 0 (= 10 - 10), the value (324) ($\partial G/\partial t$) indicating the temporal change in the pixel value G of the third pixel is 2 (= 12 - 10), and the value (325) ($\partial G/\partial t$) indicating the temporal change in the pixel value G of the fourth pixel is 1 (= 31 - 30).

Therefore, it can be estimated that the relationship between the value ($\partial G/\partial x$) indicating the change in the x-axis direction of the pixel value G (pixel data) caused by the shaking of the infrared camera 120 and the value ($\partial G/\partial t$) indicating the temporal change is expressed by the following Formula 1.

$$\partial G/\partial t = Sx \cdot \partial G/\partial x \qquad ... \text{(Formula 1)}$$

Sx is a value indicating a blur in the x-axis direction of the infrared frame image caused by the shaking of the infrared camera 120. In the case of Fig. 2, Sx is the blur amount in the x-axis direction between two consecutive infrared frame images.

The value ($\partial G/\partial t$) indicating the temporal change in the pixel value G caused by the shaking of the infrared camera 120 is a signal change Ns due to the shaking of the infrared camera 120, and thus, it can be estimated that the signal change Ns due to the shaking of the infrared camera 120 is expressed by the following Formula 2.

$$Ns = \partial G/\partial t = Sx \cdot \partial G/\partial x \qquad \text{... (Formula 2)}$$

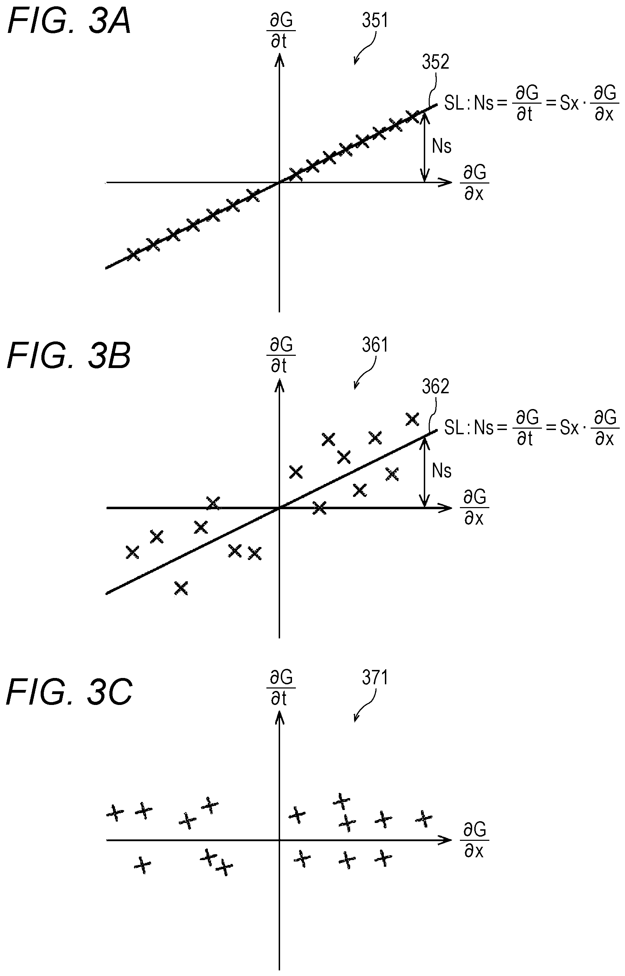

Figs. 3(a), 3(b), and 3(c) illustrate three graphs 351, 361, and 371 each illustrating the relationship between the value ($\partial G/\partial x$) indicating the change in the x-axis direction of the pixel value G and the value ($\partial G/\partial t$) indicating the temporal change in the pixel value G for each of all the pixels constituting the next infrared frame image.

The horizontal axis of each of the graph 351, the graph 361, and the graph 371 represents the value ($\partial G/\partial x$) indicating the change in the x-axis direction of the pixel value G, and the vertical axis represents the value ($\partial G/\partial t$) indicating the temporal change in the pixel value G. A straight line SL is expressed by Formula 2. x indicates coordinates ($\partial G/\partial x$, $\partial G/\partial t$) corresponding to each pixel constituting the next infrared frame image.

For example, referring to Fig. 2, the coordinates corresponding to the first pixel 312 of the next infrared frame image are (9, 1), the coordinates corresponding to the second pixel 313 are (2, 0), and the coordinates corresponding to the third pixel 314 are (19, 2).

The graph 351 of Fig. 3(a) illustrates a case where the subject does not change and the shaking of the infrared camera 120 occurs in the x-axis direction. The pixel value of each pixel does not include a signal change due to a change in the subject, but includes the signal change Ns due to the shaking of the infrared camera 120. For this reason, the coordinates corresponding to each pixel are distributed on the straight line SL (352). The signal change due to the change in the subject represents, for example, an image of gas leaked from the gas leakage monitoring target.

The graph 361 of Fig. 3(b) illustrates a case where the subject changes and the camera shaking occurs in the x-axis direction. The pixel value of each pixel includes the signal change Ns due to the shaking of the infrared camera 120 and the signal change due to the change in the subject. Therefore, points representing pixels are distributed above the straight line SL (362) in the vertical axis direction and below the straight line SL (362) in the vertical axis direction.

The blur amount calculation unit 152 uses a method using an average value or a method using statistical processing when obtaining Sx (value indicating the blur in the x-axis direction of the infrared frame image caused by the shaking of the infrared camera 120).

In the case of using the method using the average value, the blur amount calculation unit 152 obtains an average value of $\partial G/\partial x$ and an average value of $\partial G/\partial t$ at the coordinates ($\partial G/\partial x$, $\partial G/\partial t$) shown in the graph 361 of Fig. 3(b), and obtains Sx from these average values and Formula 2. Since the value of Sx is unstable near $\partial G/\partial x=0$, coordinates near $\partial G/\partial x=0$ are excluded.

In a case where the method using the statistical processing is used, the blur amount calculation unit 152 obtains Sx by performing the statistical processing (for example, processing of obtaining a regression line) on the coordinates ($\partial G/\partial x$, $\partial G/\partial t$) shown in the graph 361. Since the regression line obtained using the coordinates shown in the graph 361 is the straight line SL (362), Sx is obtained by obtaining the regression line using the points representing the pixels shown in the graph 361.

The statistical processing includes, for each of a plurality of pixels constituting an infrared frame image in the coordinate system including the axis indicating the direction of a spatial change and the axis indicating the direction of a temporal change, a process of configuring coordinates by a value indicating a spatial change and a value indicating a temporal change, and a process of obtaining a regression equation approximating a distribution of the coordinates in the coordinate system.

Examples of a figure represented by the regression equation include a regression line, a regression curve, a regression plane, and a regression curved surface. Figs. 3(a) to 3(c) illustrate the case of the regression line.

In order to simplify the description, the case where the shaking of the infrared camera 120 occurs in the x-axis direction has been described above.

Note that, in a case where the shaking of the infrared camera 120 occurs in the x-axis direction and the y-axis direction, it can be estimated that the signal change Ns due to the shaking of the infrared camera 120 is expressed by the following Formula 3 when considered as in the cases of Formulas 1 and 2.

$$Ns = \partial G/\partial t = Sx \cdot \partial G/\partial x + Sy \cdot \partial G/\partial y \qquad \text{... (Formula 3)}$$

$\partial G/\partial y$ is a value indicating the change in the y axis direction of the pixel value G (pixel data) (value indicating the spatial change in the pixel value). Sy is a value indicating the blur in the y-axis direction of the infrared frame image caused by the shaking of the infrared camera 120. Examples of such a value include a blur amount in the y-axis direction between two consecutive infrared frame images.

Note that the blur amount calculation unit 152 may acquire the shake amount of the infrared camera 120.

The infrared camera 120 may include a physical sensor such as a gyro sensor. The physical sensor measures the shake amount of the infrared camera 120. The blur amount calculation unit 152 acquires the measured shake amount of the infrared camera 120 from the physical sensor.

(c) Blur Correction Unit 153

The blur correction unit 153 (blur correction unit) corrects a blur in the frame image generated by the visible light camera 110 or the infrared camera 120 using the blur amount (index value) calculated by the blur amount calculation unit 152, thereby generating a corrected frame image (corrected image) as described below.

Note that the processing of the blur correction unit 153 is described in detail in Patent Literature 1.

Since the change in the subject generally has no correlation with the shaking of the infrared camera 120 in the x-axis direction, the signal change Ns due to the shaking of the infrared camera 120 and the signal change due to the change in the subject can be separated.

Therefore, the blur correction unit 153 performs correction to remove the signal change Ns due to the shaking of the infrared camera 120 from the infrared frame image.

The blur correction unit 153 writes the corrected infrared frame image obtained by removing the signal change Ns due to the shaking of the infrared camera 120 from the infrared frame image into the storage device 109 via the input and output circuit 107 as a corrected infrared frame image.

The blur correction unit 153 generates the corrected infrared frame image every time the infrared frame image is acquired from the infrared camera 120, and writes the generated corrected infrared frame image into the storage device 109. In this manner, a plurality of corrected infrared frame images are written into the storage device 109.

As a result, the signal change Ns due to the shaking of the infrared camera 120 camera can be removed from the infrared frame image, and the signal change due to the change in the subject can remain in the infrared image frame.

The graph 371 of Fig. 3(c) illustrates a case where the graph 362 illustrated in Fig. 3(b) is corrected to remove the signal change Ns due to the shaking of the infrared camera 120. In the graph 362, points representing the individual pixels are distributed on both sides of the horizontal axis.

Note that the blur correction unit 153 may correct the blur from the infrared frame image as follows.

The infrared camera 120 may include a physical sensor such as a gyro sensor. The physical sensor measures the shake amount of the infrared camera 120. The blur amount calculation unit 152 described above acquires the measured blur amount of the infrared camera 120 from the physical sensor.

The blur correction unit 153 performs correction to remove the blur amount acquired by the blur amount calculation unit 152 from the infrared frame image.

Note that the blur correction unit 153 may perform correction to remove the blur amount acquired by the blur amount calculation unit 152 from the visible-light frame image generated by the visible light camera 110 to generate the corrected visible-light frame image (corrected frame image).

(d) Image Generation Unit 154

As described below, the image generation unit 154 (image generation unit) may detect the presence of gas, solid particulates, or liquid particulates from the corrected infrared frame image (corrected frame image) generated by the blur correction unit 153 or from the corrected visible-light frame image (corrected frame image) generated by the visible light camera 110 using the same method as the method described in the blur correction unit 153, and generate a detected frame image (detected image) representing the detected gas, solid particulates, or liquid particulates.

In addition, the image generation unit 154 may generate a captured frame image (captured image) or a processed frame image (processed image) from the corrected infrared frame image (corrected frame image) or the corrected visible-light frame image (corrected frame image).

Note that the processing of the image generation unit 154 is described in detail in Patent Literature 2.

In gas detection using an infrared frame image, gas leakage and a background temperature change may occur in parallel, and in a case where the background temperature change is larger than the temperature change caused by the leaked gas, it is necessary to consider the background temperature change.

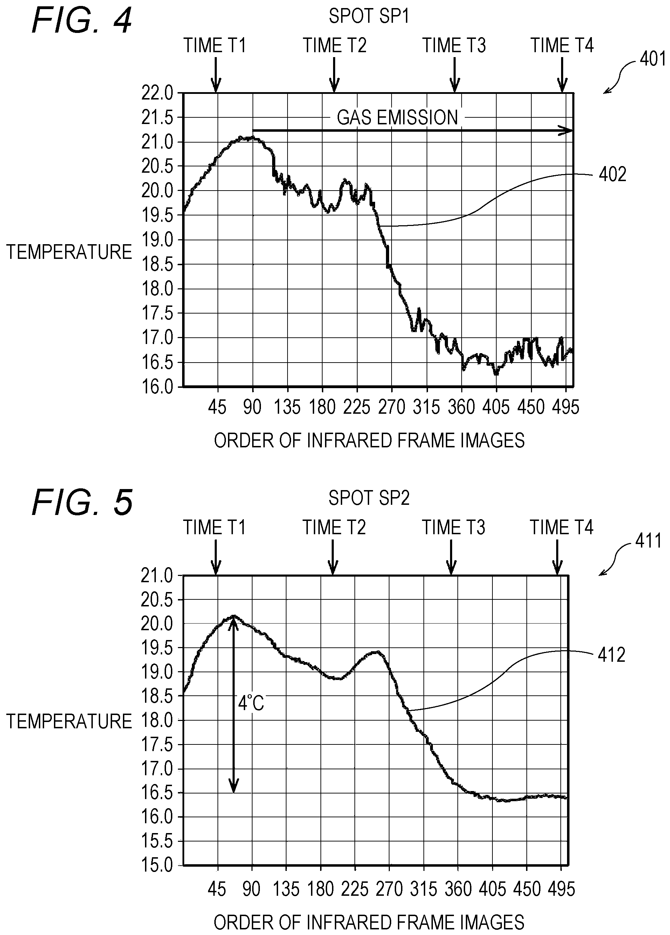

Fig. 4 is a graph 401 illustrating a temperature change at a spot SP1 where gas is emitted, and a curve 402 illustrating the temperature change is drawn. Fig. 5 is a graph 411 illustrating a temperature change at a spot SP2 where no gas is emitted, and a curve 412 illustrating the temperature change is drawn. The spot SP1 and the spot SP2 are close to each other and are represented in one infrared frame image. The temperature of the gas emitted at the spot SP1 does not affect the spot SP2. The vertical axis of these graphs represents temperature. In addition, the horizontal axis of these graphs represents the order of infrared frame images.

For example, in the horizontal axis, 45 means the 45th infrared frame image. The frame rate is 30 fps. Therefore, the time from the first infrared frame image to the 450th infrared frame image is 15 seconds.

Since the gas is emitted at the spot SP1, the gas is floating at the spot SP1, and the temperature change at the spot SP1 represents a temperature change obtained by adding the background temperature change and the temperature change due to the leaked gas. On the other hand, no gas is emitted at the spot SP2. That is, the temperature change at the spot SP2 represents the background temperature change.

In a state where the infrared camera 120 captures the moving image of the gas leakage monitoring target and the background, when the gas leakage and the background temperature change occur in parallel and the background temperature change is larger than the temperature change caused by the leaked gas, the state of the gas leakage cannot be found from the moving image of infrared images.

This is because moving image data D1 that is an infrared moving image obtained by the infrared camera 120 includes, in addition to first frequency component data indicating the temperature change caused by the gas leakage, second frequency component data that is lower in frequency than the first frequency component data and indicates the background temperature change. The image indicated by the first frequency component data is invisible due to the image (change in brightness of the background) indicated by the second frequency component data.

Fine changes included in the curve 402 illustrated in Fig. 4 correspond to the first frequency component data. The curve 412 illustrated in Fig. 5 corresponds to the second frequency component data.

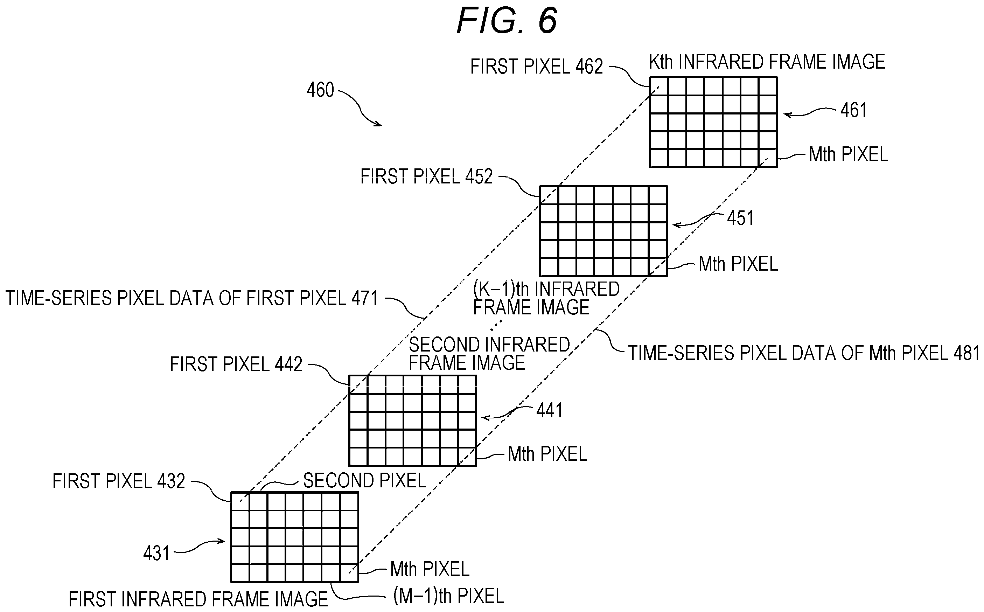

As described below, the image generation unit 154 performs processing of removing the second frequency component data indicating the background temperature change from an infrared moving image 460 (Fig. 6) obtained by the infrared camera 120, and acquires the first frequency component data indicating the temperature change caused by the leaked gas.

Note that, in a case where there is no background temperature change, it is needless to say that the processing of removing the second frequency component data indicating the background temperature change from the infrared moving image 460 obtained by the infrared camera 120 is not necessary.

As illustrated in Fig. 6, the infrared moving image 460 has a structure in which a plurality of infrared frame images are arranged in time series. Data in which pieces of pixel data of pixels at the same positions in the plurality of infrared frame images 431, 441,... , 451, and 461 are arranged in time series is referred to as time-series pixel data.

Next, the time-series pixel data will be specifically described.

It is assumed that the number of infrared frame images included in the infrared moving image 460 is K. Furthermore, it is assumed that one infrared frame image includes M pixels arranged in a matrix, that is, the first pixel, the second pixel,... , the (M-1)th pixel, and the Mth pixel. Each pixel value indicates the luminance or temperature of the pixel.

Pixels at the same positions in the plurality of (K) infrared frame images mean pixels in the same order in the individual infrared frame images.

For example, in the description of the first pixel, time-series pixel data 471 of the first pixel is data in which a pixel value of a first pixel 432 included in the first infrared frame image 431, a pixel value of a first pixel 442 included in the second infrared frame image 441,... , a pixel value of a first pixel 452 included in the (K-1)th infrared frame image 451, and a pixel value of a first pixel 462 included in the Kth infrared frame image 461 are arranged in time series.

In addition, in the description of the Mth pixel, time-series pixel data 481 of the Mth pixel is data in which a pixel value of the Mth pixel included in the first infrared frame image 431, a pixel value of the Mth pixel included in the second infrared frame image 441,... , a pixel value of the Mth pixel included in the (K-1)th infrared frame image 451, and a pixel value of the Mth pixel included in the Kth infrared frame image 461 are arranged in time series.

The number of pieces of time-series pixel data is equal to the number of pixels constituting one infrared frame image, and the plurality of (M) pieces of time-series pixel data constitute the infrared moving image 460.

The image generation unit 154 determines data extracted from the time-series pixel data as the second frequency component data by calculating, for the time-series pixel data, a simple moving average in units of a first predetermined number L of infrared frame images, which are smaller in number than K infrared frame images illustrated in Fig. 6.

In this manner, the image generation unit 154 extracts M pieces of second frequency component data respectively corresponding to M pieces of time-series pixel data illustrated in Fig. 6.

Next, the image generation unit 154 calculates the difference between the time-series pixel data and the second frequency component data extracted from the time-series pixel data to obtain first difference data. The image generation unit 154 calculates M pieces of first difference data respectively corresponding to M pieces of time-series pixel data.

Next, the image generation unit 154 calculates, for the first difference data, a moving standard deviation in units of a second predetermined number J of infrared frame images, which are smaller in number than K infrared frame images, thereby calculating first dispersion data (standard deviation) indicating a variation of the first difference data. That is, the image generation unit 154 calculates a plurality of (M) pieces of first dispersion data respectively corresponding to the plurality of (M) pieces of time-series pixel data illustrated in Fig. 6. The first dispersion data is data indicating a dispersion of the waveform of the first difference data.

The second predetermined number J of infrared frame images are, for example, a plurality of infrared frame images received in about two seconds.

Next, the image generation unit 154 multiplies the obtained M pieces of first dispersion data (standard deviations) by, for example, 1000 or 5000, that is, performs a calculation to enhance the standard deviation on the standard deviations, thereby generating M pieces of enhanced data in which M pieces of first dispersion data are multiplied by 1000 (or 5000).

Next, the image generation unit 154 arranges the generated M pieces of enhanced data in a matrix in the frame image to generate one detected frame image.

The detected frame image thus obtained shows a state where the gas is emitted.

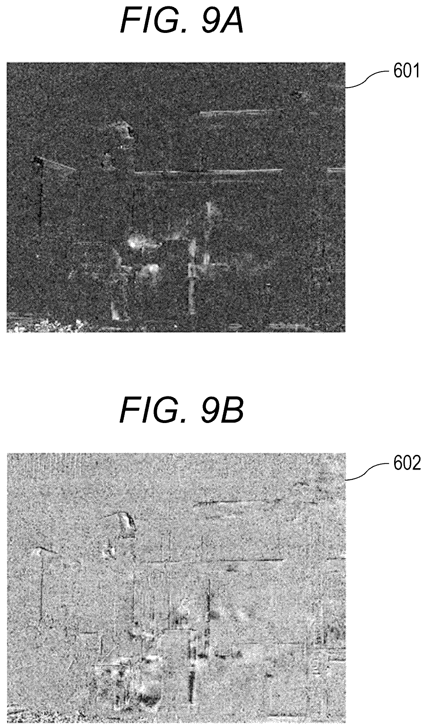

An example of the detected frame image generated by the image generation unit 154 in this manner is illustrated as a detected frame image 601 in Fig. 9(a).

Next, the image generation unit 154 writes the generated detected frame image into the storage device 109 via the input and output circuit 107.

Note that the moving standard deviation is used in the above description, but the image generation unit 154 may calculate, for the first difference data, a moving variance in units of the second predetermined number J of infrared frame images, which are smaller in number than K infrared frame images, thereby calculating the first dispersion data (variance) indicating the variation of the first difference data. Next, the image generation unit 154 multiplies the obtained M pieces of first dispersion data (variances) by, for example, 1000 or 5000, that is, performs a calculation to enhance the variance on the variances, thereby generating M pieces of enhanced data in which M pieces of first dispersion data are multiplied by 1000 (or 5000). Next, the image generation unit 154 may arrange the generated M pieces of enhanced data in a matrix in the frame image to generate one detected frame image.

This method is also one of the gas enhancement methods.

The visible light camera 110 or the infrared camera 120 may generate moving image data with a structure in which a plurality of frame images are arranged in time series. Data in which pieces of pixel data of pixels at the same positions in a plurality of the frame images are arranged in time series is defined as time-series pixel data. The image generation unit 154 may calculate, for each of a plurality of the time-series data constituting the moving image data, a standard deviation or a variance in units of a predetermined number of frame images smaller than the number of a plurality of the frame images, and generate a detected frame image (detected image) using the calculated standard deviation or variance.

In a case where the gas detection device 10 detects gas, the infrared camera 120 may generate moving image data with a structure in which a plurality of infrared frame images are arranged in time series. Data in which pieces of pixel data of pixels at the same positions in a plurality of the infrared frame images are arranged in time series is defined as the time-series pixel data. The image generation unit 154 may calculate, for each of a plurality of the time-series data constituting the moving image data, a standard deviation or a variance in units of a predetermined number of infrared frame images smaller than the number of a plurality of the infrared frame images, and generate a detected frame image (detected image) using the calculated standard deviation or variance.

In a case where the gas detection device 10 detects water vapor, solid particulates, or liquid particulates, the visible light camera 110 may generate moving image data with a structure in which a plurality of visible-light frame images are arranged in time series. Data in which pieces of pixel data of pixels at the same positions in a plurality of the visible-light frame images are arranged in time series is defined as the time-series pixel data. The image generation unit 154 may calculate, for each of a plurality of the time-series data constituting the moving image data, a standard deviation or a variance in units of a predetermined number of visible-light frame images smaller than the number of a plurality of the visible-light frame images, and generate a detected frame image (detected image) using the calculated standard deviation or variance.

In a case where the gas detection device 10 detects gas floating in the space, the infrared camera 120 may consecutively generate J infrared frame images by capturing. In each of J infrared images, M pixels are arranged in a matrix. In J infrared images, J pixels at the same pixel positions constitute one piece of time-series pixel data. The entire J infrared images include M pieces of time-series pixel data. The image generation unit 154 calculates, for each of M pieces of time-series pixel data, the standard deviation or variance of the pixel values of J pixels, and generates a detected frame image (detected image) using the calculated standard deviation or variance.

The visible light camera 110 or the infrared camera 120 may consecutively generate J images by capturing. In each of J images, M pixels are arranged in a matrix. In J images, J pixels at the same pixel positions constitute one piece of time-series pixel data. The entire J images include M pieces of time-series pixel data. The image generation unit 154 may calculate, for each of M pieces of time-series pixel data, the standard deviation or variance of the pixel values of J pixels, and generate a detected frame image (detected image) using the calculated standard deviation or variance.

In a case where the gas detection device 10 detects water vapor or the like, solid particulates or liquid particulates, and the like floating in the space, the visible light camera 110 may consecutively generate J visible light images by capturing. In each of J visible light images, M pixels are arranged in a matrix. In J visible light images, J pixels at the same pixel positions constitute one piece of time-series pixel data. The entire J visible light images include M pieces of time-series pixel data. The image generation unit 154 may calculate, for each of M pieces of time-series pixel data, the standard deviation or variance of the pixel values of J pixels using the gas enhancement method described above, and generate a detected frame image (detected image) using the calculated standard deviation or variance.

In many cases, water vapor or the like, solid particulates or liquid particulates (solid particulates or liquid particulates are, for example, smoke), and the like are not stationary but fluctuate. In a case where water vapor or the like, solid particulates or liquid particulates, and the like can be visually recognized in the visible light image, the presence of fluctuating water vapor or the like, solid particulates, liquid particulates, and the like can be detected by using the gas enhancement method in a plurality of consecutive visible light images.

(e) Blur Determination Unit 155

The blur determination unit 155 (determination unit) determines whether or not the shake amount (index value) of the infrared camera 120 is within a correctable range (predetermined range) as follows.

(e-1) The infrared camera 120 (capturing unit) generates a first infrared image (first image) at a first time point, and the blur correction unit 153 generates a second infrared image (second image) aligned with the first infrared image, in which a blur is corrected, at a second time point after the first time point. The blur amount calculation unit 152 (acquisition unit) calculates the degree of matching between the generated first image and the generated second image as an index value as described below. The blur determination unit 155 (determination unit) determines whether or not the calculated degree of matching is equal to or larger than a predetermined threshold. In a case where it is determined that the calculated degree of matching is less than the predetermined threshold, the integrated control unit 151 (display control unit) executes control to display a captured frame image (captured image). In a case where it is determined that the calculated degree of matching is less than the predetermined threshold, the integrated control unit 151 may execute control to display a processed frame image (processed image).

More specifically, the blur amount calculation unit 152 reads one corrected infrared frame image (referred to as "first frame image") from the storage device 109 via the input and output circuit 107. Furthermore, the blur amount calculation unit 152 reads one corrected infrared frame image (referred to as "second frame image") generated immediately after the first frame image from the storage device 109 via the input and output circuit 107.

Next, as described below, the blur amount calculation unit 152 calculates the degree of matching such as normalized cross-correlation (NCC) between the first frame image and the second frame image by pattern matching.

The blur amount calculation unit 152 calculates NCC using the following calculation formula.

[Mathematical Formula 1]

$$NCC(d_x, d_y) = \frac{\sum_{x=0}^{w-1} \sum_{y=0}^{h-1} \{I(d_x + x, d_y + y)T(x,y)\}}{\sqrt{\sum_{x=0}^{w-1} \sum_{y=0}^{h-1} \{I(d_x + x, d_y + y)\}^2} \sqrt{\sum_{x=0}^{w-1} \sum_{y=0}^{h-1} \{T(x,y)\}^2}}$$

where the pixel value of the first frame image is I(x, y), the pixel value of the second frame image is T(x, y), the width of the second frame image is w, the height of the second frame image is h, and the scanning positions are dx and dy.

Next, if the calculated degree of matching is equal to or larger than a threshold T1, the blur determination unit 155 determines that it is within the correctable range. The threshold T1 is, for example, 0.9. In this case, the integrated control unit 151 (display control unit) executes control to display the detected frame image (detected image).

On the other hand, if the calculated degree of matching is less than the threshold T1, the blur determination unit 155 determines that it does not fall within the correctable range. In this case, the integrated control unit 151 (display control unit) executes control to display the captured frame image (captured image).

(e-2) Furthermore, the blur determination unit 155 may determine whether or not the shake amount of the infrared camera 120 is within the correctable range as follows.

The infrared camera 120 may include a physical sensor such as a gyro sensor. The physical sensor measures a camera shake amount. The physical sensor is, for example, an angular velocity sensor that measures the rotation angular velocity of the infrared camera 120 (capturing unit).

The blur amount calculation unit 152 (acquisition unit) calculates the blur amount indicating shaking of the infrared camera 120 as an index value using the rotation angular velocity measured by the angular velocity sensor as described below.

The blur amount calculation unit 152 calculates a blur amount $\Delta x$ in the x-axis direction and a blur amount $\Delta y$ in the y-axis direction using the following calculation formulas.

[Mathematical Formula 2]

$$\begin{bmatrix} \Delta x \\ \Delta y \end{bmatrix} = \begin{bmatrix} x - x' \\ y - y' \end{bmatrix}$$

$$\begin{bmatrix} x' \\ y' \end{bmatrix} = \begin{bmatrix} \cos\theta_r & \sin\theta_r \\ -\sin\theta_r & \cos\theta_r \end{bmatrix} \begin{bmatrix} x \\ y \end{bmatrix} + \begin{bmatrix} d_y \\ d_p \end{bmatrix}$$

$$d_y = L\tan\theta_y \approx L\theta_y$$

$$d_p = L\tan\theta_p \approx L\theta_p$$

where θy, θp, and θr are rotation amounts of yaw, pitch, and roll of the infrared camera 120, respectively.

The threshold of the blur amount in the x-axis direction is indicated by T1, and the threshold of the blur amount in the y-axis direction is indicated by T2. The threshold T1 is, for example, one pixel, and the threshold T2 is, for example, one pixel as well.

The blur determination unit 155 determines whether or not the blur amount is within the predetermined range. For example, the blur determination unit 155 determines whether or not $\Delta x < T1$ and $\Delta y < T2$ are satisfied. That is, the blur determination unit 155 determines whether or not the blur amount is less than a predetermined threshold.

In a case where $\Delta x < T1$ and $\Delta y < T2$ are satisfied, the blur determination unit 155 determines that the blur amount is within the correctable range. That is, in a case where the blur determination unit 155 determines that the blur amount is less than the predetermined threshold, the integrated control unit 151 (display control unit) executes control to display the detected frame image (detected image).

On the other hand, in a case where $\Delta x < T1$ and $\Delta y < T2$ are not satisfied, the blur determination unit 155 determines that the blur amount does not fall within the correctable range. That is, in a case where the blur determination unit 155 determines that the blur amount is equal to or larger than the predetermined threshold, the integrated control unit 151 (display control unit) executes control to display the captured frame image (captured image). In a case where it is determined that the blur amount is equal to or larger than the predetermined threshold, the integrated control unit 151 may execute control to display the processed frame image (processed image).

(e-3) In addition, the blur determination unit 155 may determine whether or not the shaking of the infrared camera 120 is within the correctable range using the blur amount Sx and the blur amount Sy calculated by the blur amount calculation unit 152 described above.

The threshold of the blur amount in the x-axis direction is indicated by T1, and the threshold of the blur amount in the y-axis direction is indicated by T2. The threshold T1 is, for example, one pixel, and the threshold T2 is, for example, one pixel as well.

The blur determination unit 155 determines whether or not Sx<T1 and Sy<T2 are satisfied.

In a case where Sx<T1 and Sy<T2 are satisfied, the blur determination unit 155 determines that the blur amount is within the correctable range.

On the other hand, in a case where Sx<T1 and Sy<T2 are not satisfied, the blur determination unit 155 determines that the blur amount does not fall within the correctable range.

1.2 Operation in Gas Detection Device 10

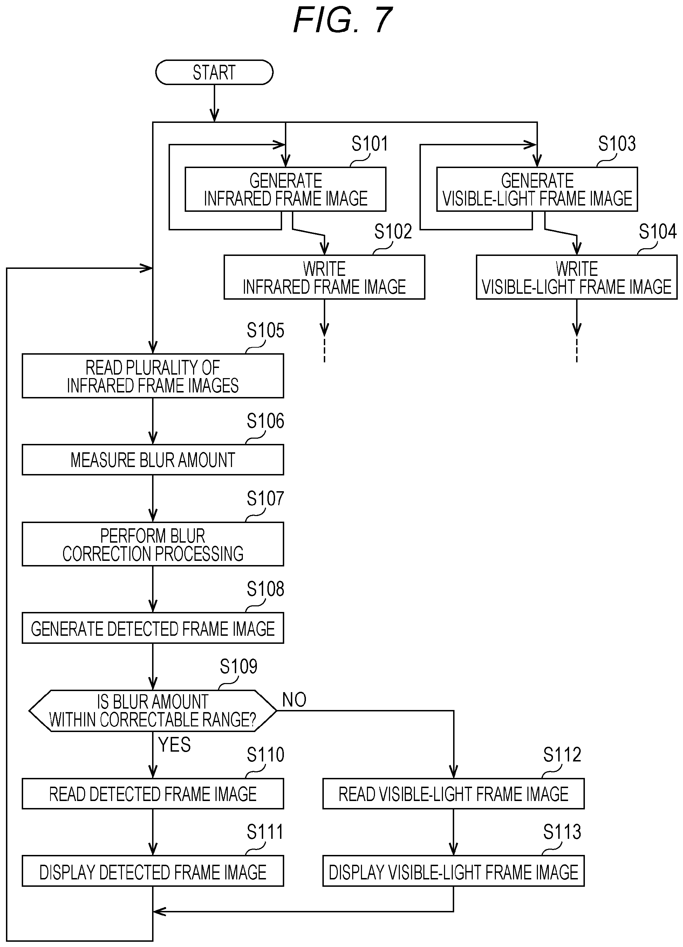

An operation in the gas detection device 10 will be described with reference to the flowchart illustrated in Fig. 7.

The infrared camera 120 repeatedly generates an infrared frame image (step S101).

Every time the generation of one infrared frame image is completed, the input circuit 105 writes the generated infrared frame image into the storage device 109 via the input and output circuit 107 (step S102).

On the other hand, the visible light camera 110 repeatedly generates a visible-light frame image (step S103).

Every time the generation of one visible-light frame image is completed, the input circuit 104 writes the generated visible-light frame image into the storage device 109 via the input and output circuit 107 (step S104).

The integrated control unit 151 reads a plurality of infrared frame images from the storage device 109 via the input and output circuit 107 (step S105).

The blur amount calculation unit 152 measures the blur amount (step S106).

The blur correction unit 153 performs blur correction processing (step S107).

The image generation unit 154 generates a detected frame image (step S108).

The blur determination unit 155 determines whether or not the blur amount is within a correctable range (step S109).

In a case where it is determined that the blur amount is within the correctable range ("YES" in step S109), the integrated control unit 151 controls the input and output circuit 107 to read the detected frame image from the storage device 109 (step S110), controls the output circuit 106 to output the read detected frame image to the monitor 108, and displays the detected frame image on the monitor 108 (step S111). Next, the processing returns to step S105 and is repeated.

In a case where it is determined that the blur amount does not fall within the correctable range ("NO" in step S109), the integrated control unit 151 controls the input and output circuit 107 to read the visible-light frame image from the storage device 109 (step S112), controls the output circuit 106 to output the read visible-light frame image to the monitor 108, and displays the visible-light frame image on the monitor 108 (step S113). Next, the processing returns to step S105 and is repeated.

Thus, the description of the operation in the gas detection device 10 is ended.

1.3 First Modification

Instead of the method of generating the detected frame image described above, the detected frame image may be generated as follows.

The blur correction unit 153 performs, for each infrared frame image generated by the infrared camera 120, correction to remove a signal change due to the shaking of the infrared camera 120 from the infrared frame image, and generates a corrected infrared frame image.

The input and output circuit 107 writes the generated corrected infrared frame image into the storage device 109 every time the corrected infrared frame image is generated.

The image generation unit 154 reads one corrected infrared frame image (referred to as "first frame image") from the storage device 109 via the input and output circuit 107.

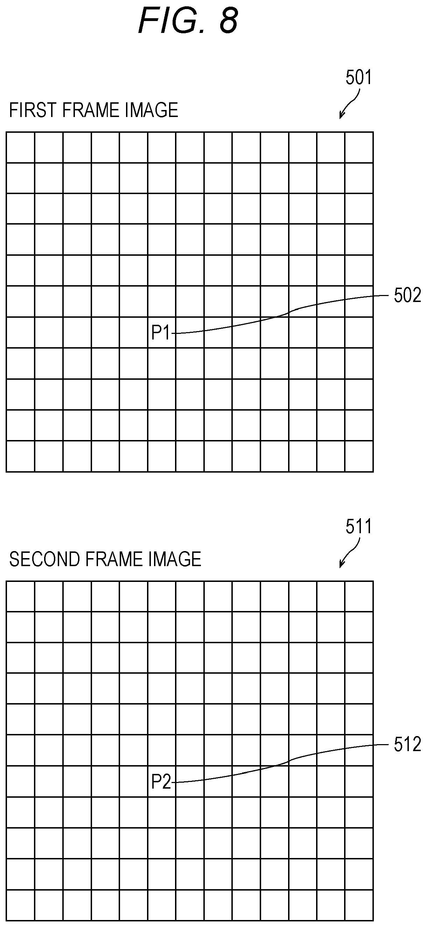

A first frame image 501 is illustrated in Fig. 8.

In addition, the image generation unit 154 reads one corrected infrared frame image (referred to as "second frame image") generated after the generation of the first frame image from the storage device 109 via the input and output circuit 107.

A second frame image 511 is illustrated in Fig. 8.

The interval between the time point at which the first frame image is generated and the time point at which the second frame image is generated is, for example, 0.2 seconds.

The image generation unit 154 repeats the following for all the pixels of the first frame image.

The image generation unit 154 calculates the absolute value of the difference between a pixel value of one pixel (referred to as "first pixel") of the first frame image and a pixel value of a pixel (referred to as "second pixel") of the second frame image located at the same pixel position as the first pixel.

A pixel value P1 of the first pixel 502 and a pixel value P2 of the second pixel 512 are illustrated in Fig. 8.

$$\text{Absolute value of difference} = |\text{ pixel value P1 of first pixel 502} - \text{pixel value P2 of second pixel 512 }|$$

When the calculation of the absolute values of the differences is completed for all the pixels of the first frame image, the image generation unit 154 arranges all the calculated absolute values of the differences in a matrix on the frame image.

Thus, the detected frame image is a frame image (difference image) in which all the calculated absolute values of the differences are arranged.

The image generation unit 154 writes the generated detected frame image into the storage device 109 via the input and output circuit 107.

The background of the gas captured in the corrected infrared frame image is a gas facility, a building, or the like that does not move, and for a portion in which the gas facility, the building, or the like is present, the absolute value of the difference between the pixel value of the first frame image and the pixel value of the second frame image is "0", and the background does not appear on the detected frame image.

On the other hand, since the gas is floating in the space, if the absolute value of the difference included in each pixel of the detected frame image is not "0", each pixel having a pixel value that is not "0" indicates a temperature change. Therefore, it is considered that the gas is captured in the detected frame image.

The method of generating the detected frame image, which has been described above, is referred to as a gas enhancement method using a difference. Note that, in the present specification, in a case where the standard deviation or variance is used, it is simply referred to as a gas enhancement method and distinguished from the gas enhancement method using a difference.

An example of the detected frame image generated by the image generation unit 154 in this manner is illustrated as a detected frame image 602 in Fig. 9(b).

As described above, the visible light camera 110 or the infrared camera 120 generates the first frame image (first image) at the first time point, and generates the second frame image (second image) at the second time point after the first time point. The image generation unit 154 calculates the difference value of pixel values for every two pixels at the same pixel positions in the first frame image and the second frame image, and generates, for every two pixels, a difference frame image (difference image) as the detected frame image (detected image) using the calculated difference value.

In a case where the gas detection device 10 detects gas floating in the space, the infrared camera 120 generates the first infrared frame image (first infrared image) by capturing at the first time point, and generates the second infrared frame image (second infrared image) by capturing at the second time point after the first time point. The image generation unit 154 calculates the difference value of pixel values for every two pixels at the same pixel positions in the first infrared frame image and the second infrared frame image, and generates, for every two pixels, a difference frame image (difference image) as the detected frame image (detected image) using the calculated difference value.

Furthermore, in a case where the gas detection device 10 detects water vapor, solid particulates, or liquid particulates floating in the space, the visible light camera 110 generates the first visible-light frame image (first visible light image) by capturing at the first time point, and generates the second visible-light frame image (second visible light image) by capturing at the second time point after the first time point. The image generation unit 154 calculates the difference value of pixel values for every two pixels at the same pixel positions in the first visible-light frame image and the second visible-light frame image, and generates, for every two pixels, a difference frame image (difference image) as the detected frame image (detected image) using the calculated difference value. In many cases, water vapor or the like and solid particulates or liquid particulates (solid particulates or liquid particulates are, for example, smoke), and the like are not stationary but fluctuate. In a case where water vapor or the like, solid particulates or liquid particulates, and the like can be visually recognized in the visible light image, the presence of fluctuating water vapor or the like, solid particulates, liquid particulates, and the like can be detected by using the gas enhancement method using a difference in a plurality of consecutive visible light images.

1.4 Second Modification

In the flowchart illustrated in Fig. 7, in step S108, the image generation unit 154 generates the detected frame image, and in step S109 subsequent to step S108, the blur determination unit 155 determines whether or not the blur amount is within the correctable range.

However, it is not limited this procedure.

The blur determination unit 155 determines whether or not the blur amount is within the correctable range, and in a case where the blur amount is within the correctable range, the image generation unit 154 may generate the detected frame image.

Referring to the flowchart illustrated in Fig. 7, instead of performing steps S107 and S 108 between steps S106 and S109, control may be executed such that S109 is performed after step S106, and steps S107 and S108 are performed between steps S109 and S110.

In the above embodiment, regardless of the determination result of the blur determination unit 155, the image generation unit 154 generates the detected frame image.

On the other hand, in the second modification, in a case where it is determined that the blur amount is within the correctable range, the image generation unit 154 generates the detected frame image. In a case where it is determined that the blur amount does not fall within the correctable range, the image generation unit 154 does not generate the detected frame image.

As a result, as compared with the embodiment, in the second modification, in a case where the blur amount does not fall within the correctable range, the amount of the calculation performed by the image generation unit 154 can be reduced.

1.5 Third Modification

As the processed frame image, a temperature frame image representing the distribution of the temperature of a capturing target surface may be used.

In this case, instead of the visible light camera 110, an infrared camera including a filter that transmits the entire wavelength band of infrared light is used. The infrared camera receives infrared light in the entire wavelength band and generates an infrared image. The infrared frame image generated by the infrared camera represents the temperature distribution on the capturing target surface.

The main control unit 150 further includes a color conversion unit (conversion unit) that converts the temperature of each part in the temperature distribution on the generated infrared frame image into color information corresponding to the temperature using a temperature-color conversion map to generate a color frame image (color image) representing the color distribution in the capturing target.

In a case where the blur determination unit 155 determines that the blur amount does not fall within the correctable range, the integrated control unit 151 controls the color conversion unit to generate the color frame image as a processed frame image (processed image). Next, the integrated control unit 151 executes control to display the color frame image as the processed frame image.

As described above, in a case where the gas detection device 10 detect gas, the infrared camera 120 (first infrared capturing unit) selectively transmits infrared light in a wavelength band absorbed by gas to be detected to generate a first infrared frame image. The gas detection device 10 may include a second infrared camera (second infrared capturing unit) that receives the entire wavelength band of infrared light to generate a second infrared frame image, instead of the visible light camera 110. The second infrared frame image generated represents the temperature distribution on the capturing target surface. The main control unit 150 further includes the color conversion unit (conversion unit) that converts the temperature of each part in the temperature distribution into color information to generate a color frame image (color image) representing the color distribution in the capturing target. The integrated control unit 151 (display control unit) executes control to display the color frame image as the processed frame image.

1.6 Summary

As described above, according to the gas detection device 10, the blur amount of the infrared frame image is measured, and if the measured blur amount is within the correctable range, the generated detected frame image is displayed. On the other hand, if the measured blur amount does not fall within the correctable range, the generated captured frame image (captured image) or processed frame image (processed image) is displayed.

As described above, according to the gas detection device 10, even when the camera shake amount is large, the user can visually recognize the object being captured.

1.7 Specific Examples of Frame Image

Next, specific examples of the frame image will be described.

(1) Example of Detected Frame Image Generated by Gas Enhancement Method

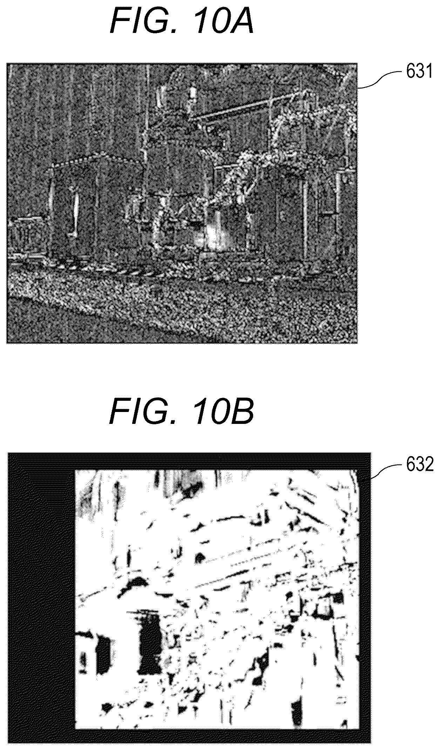

Figs. 10(a) and 10(b) illustrate detected frame images 631 and 632 generated by the gas enhancement method.

The detected frame image 631 indicates an image in a case where the blur amount is within the correctable range, and the detected frame image 632 indicates an image in a case where the blur amount is outside the correctable range.

In the detected frame image 631, the place where the gas is leaking (white colored part in image) can be clearly visually recognized. On the other hand, in the detected frame image 632, the white colored part in the image spreads over the entire image, and it is difficult to specify the place where the gas is leaking.

(2) Example of Detected Frame Image Generated by Gas Enhancement Method Using Difference

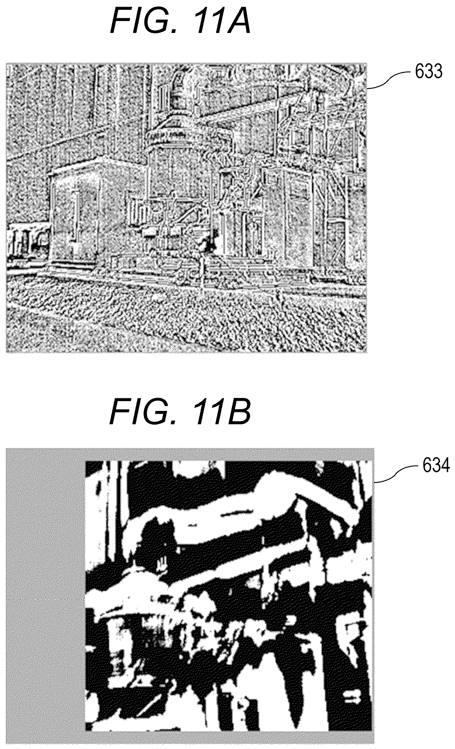

Figs. 11(a) and 11(b) illustrate detected frame images 633 and 634 generated by the gas enhancement method using a difference.

The detected frame image 633 indicates an image in a case where the blur amount is within the correctable range, and the detected frame image 634 indicates an image in a case where the blur amount is outside the correctable range.

In the detected frame image 633, the place where the gas is leaking (white colored part in image) can be clearly visually recognized. On the other hand, in the detected frame image 634, the white colored part in the image spreads over the entire image, and it is difficult to specify the place where the gas is leaking.

(3) Example of Captured Frame Image or Processed Frame Image

An example of the captured frame image or the processed frame image will be described below.

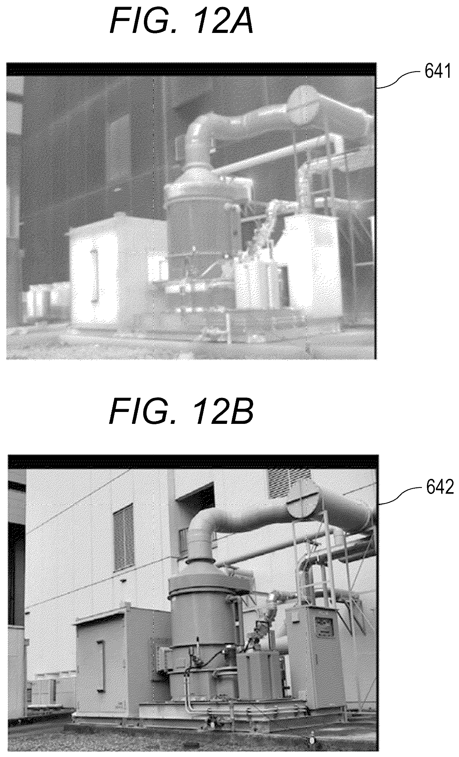

(a) An infrared frame image may be used as the captured frame image. Fig. 12(a) illustrates an infrared frame image 641 as an example of the captured frame image. In this case, instead of the visible light camera 110, an infrared camera (second infrared camera described above) including a filter that transmits the entire wavelength band of infrared light is used. The integrated control unit 151 executes control to display the infrared frame image as the captured frame image.

(b) Fig. 12(b) illustrates a visible-light frame image 642 as an example of the captured frame image.

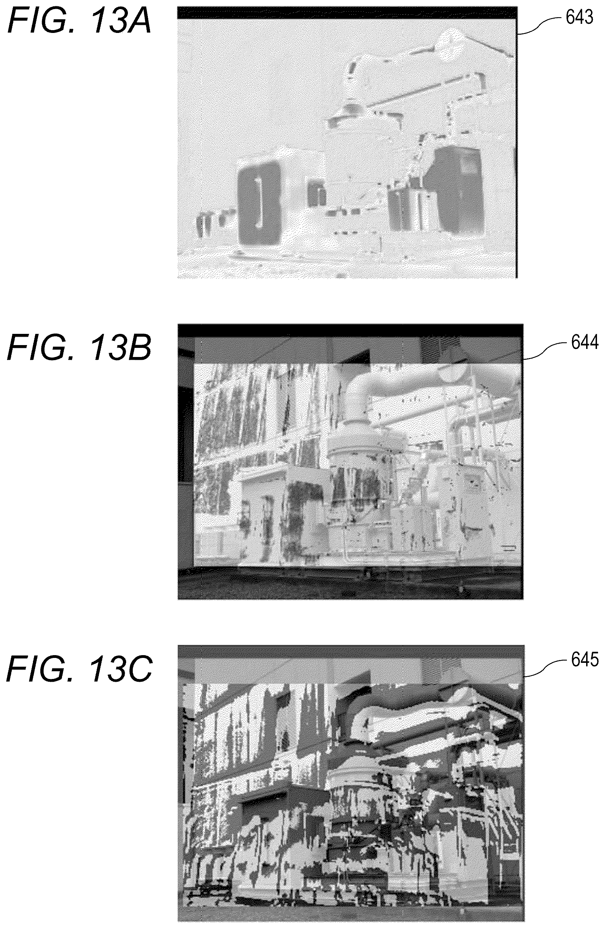

(c) Fig. 13(a) illustrates a temperature frame image 643 generated by converting temperature into color using a temperature-color conversion map as an example of the processed frame image.

Note that in the temperature frame image 643, monochrome display is performed instead of color display, and thus attention should be paid.

(d) Fig. 13(b) illustrates, as an example of the processed frame image, a superimposed frame image 644 generated by superimposing the visible-light frame image and the detected frame image generated by the gas enhancement method at 1:1.

(e) Fig. 13(c) illustrates, as an example of the processed frame image, a superimposed frame image 645 generated by superimposing the visible-light frame image and the detected frame image generated by the gas enhancement method using a difference at 1:1.

According to the infrared frame image 641, the visible-light frame image 642, the temperature frame image 643, the superimposed frame image 644, and the superimposed frame image 645, the individual capturing targets can be visually recognized.

(4) Comparative Example

As a comparative example, a specific example of a frame image will be described for an example in a case where capturing is performed in a stationary state, then the user performs capturing while walking, and then capturing is performed again in a stationary state.

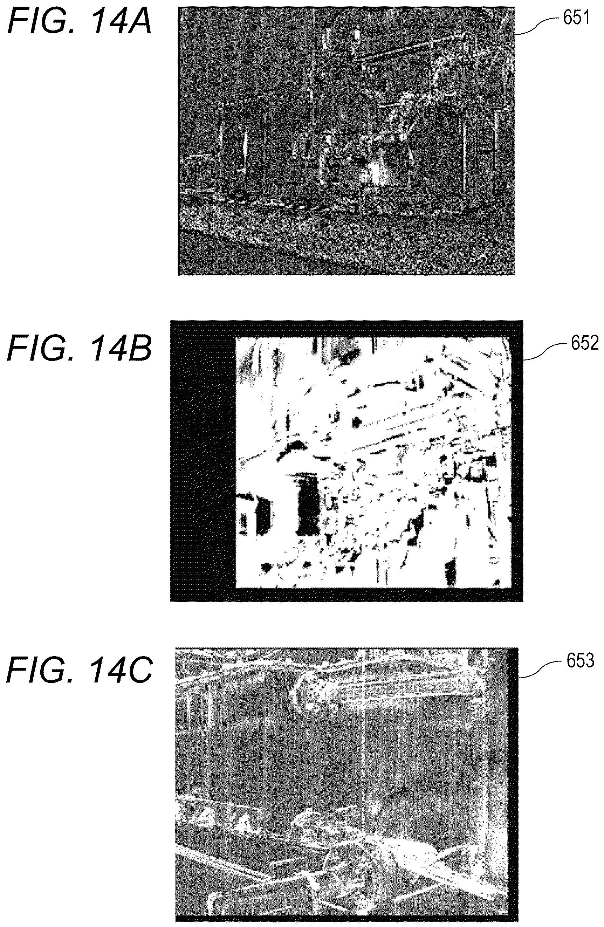

Fig. 14(a) illustrates an infrared detected frame image 651 generated by the gas enhancement method in a case where capturing is performed in a stationary state in the comparative example. Fig. 14(b) illustrates an infrared detected frame image 652 generated by the gas enhancement method in a case where the user performs capturing while walking. Fig. 14(c) illustrates an infrared detected frame image 653 generated by the gas enhancement method in a case where capturing is performed in a stationary state.

According to the infrared detected frame image 651 and the infrared detected frame image 653, the emission of the gas can be visually recognized, but in the infrared detected frame image 652, the entire image is colored white, and thus it is difficult to visually recognize the emission of the gas.

(5) Example

As an example, a specific example of a frame image will be described for an example in a case where capturing is performed in a stationary state, then the user performs capturing while walking, and then capturing is performed again in a stationary state.

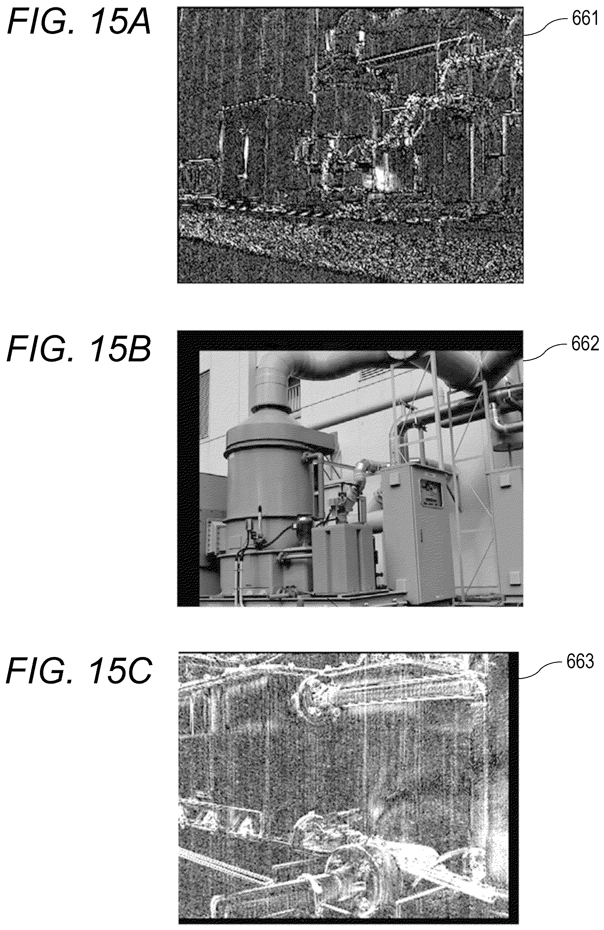

In the case of the example, Fig. 15(a) illustrates an infrared detected frame image 661 generated by the gas enhancement method in a case where capturing is performed in a stationary state. Fig. 15(b) illustrates a visible-light frame image 662 in a case where the user performs capturing while walking. Fig. 15(c) illustrates an infrared detected frame image 663 generated by the gas enhancement method in a case where capturing is performed in a stationary state.

According to the infrared detected frame image 661 and the infrared detected frame image 663, the emission of the gas can be visually recognized. On the other hand, in a state where the user performs capturing while walking, since the visible-light frame image 662 is displayed as the captured frame image, the emission of the gas cannot be visually recognized, but it is possible to visually recognize which part of the equipment or the like that is the gas detection target is captured.

As described above, even in a case where the shake amount is large in a state where the user performs capturing while walking, the user can perform capturing while visually recognizing the capturing target, although the user cannot visually recognize the emission of the gas.

2. Other Modifications

The present disclosure has been described on the basis of the above embodiments, but is not limited to the above embodiments. The following may be performed.

(1) Vapor may be visually recognized as follows.

As described above, the image generation unit 154 generates a detected frame image using a corrected infrared frame image generated by blur correction, and displays the generated detected frame image. Vapor can be detected by an infrared camera because it often has a higher temperature than the temperature of the background of vapor. In the case of vapor, a filter that transmits infrared light in a wavelength band corresponding to vapor can be used in the infrared camera.

As a result, the user can visually recognize vapor from the displayed detected frame image.

(2) In a case where the visible-light frame image captured and generated by the visible light camera 110 is used, vapor or smoke can be visually recognized as follows.

The blur correction unit 153 converts a visible-light frame image including an R color image, a G color image, and a B color image into a monochrome to generate a monochrome visible-light frame image. Next, blur correction is performed on the generated monochrome visible-light frame image as described above to generate a blur-corrected monochrome visible-light frame image. The image generation unit 154 generates a detected frame image from the blur-corrected monochrome visible-light frame image, as in the case described above.

Meanwhile, in a case where blur correction is performed on the visible-light frame image including the R color image, the G color image, and the B color image, it is necessary to perform blur correction on each of the R color image, the G color image, and the B color image. On the other hand, in a case where blur correction is performed after conversion to a monochrome, the amount of calculation is three times less than in the case where blur correction is performed on each of the R color image, the G color image, and the B color image.

Furthermore, in a case where the detected frame image is generated from the blur-corrected visible-light frame image including the R color image, the G color image, and the B color image, it is necessary to calculate the standard deviation for each of the R color image, the G color image, and the B color image, for example, by the gas enhancement method. On the other hand, in the case of calculating the standard deviation from the monochrome blur-corrected visible-light frame image, the amount of calculation amount is three times less than in the case of calculating the standard deviation from the R color image, the G color image, and the B color image.

In this manner, the user can visually recognize vapor or smoke using the displayed detected frame image. Note that the smoke refers to as a state where individual particulates are floating in the gas.

(3) As described above, the gas detection device 10 includes the CPU101, the ROM102, the RAM103, the visible light camera 110, the infrared camera 120, the monitor 108, and the like.

However, it is not limited thereto.

(a) The gas detection device 10 may not include the output circuit 106 and the monitor 108 illustrated in Fig. 1. The gas detection device 10 may include a wireless communication circuit and an antenna that perform wireless communication via a mobile phone network instead of the output circuit 106 and the monitor 108.

The gas detection device 10 may transmit the detected frame image and the captured frame image to a mobile terminal that performs wireless communication via the mobile phone network through the wireless communication circuit and the antenna. An example of the mobile terminal is a smartphone. The mobile terminal includes a monitor. The mobile terminal may receive the detected frame image and the captured frame image from the gas detection device 10 via the mobile telephone network. The monitor of the mobile terminal may display the received detected frame image and captured frame image.

(b) The gas detection device 10 may not include the output circuit 106 and the monitor 108 illustrated in Fig. 1. The gas detection device 10 may include a wireless communication circuit and an antenna that perform wireless communication via by short-range wireless (for example, Wi-Fi) instead of the output circuit 106 and the monitor 108.

The gas detection device 10 may transmit the detected frame image and the captured frame image to the mobile terminal that performs wireless communication by short-range wireless (for example, Wi-Fi) through the wireless communication circuit and the antenna. An example of the mobile terminal is a smartphone. The mobile terminal includes a monitor. The mobile terminal may receive the detected frame image and the captured frame image from the gas detection device 10 by short-range wireless. The monitor of the mobile terminal may display the received detected frame image and captured frame image.

(4) As described above, as illustrated in Fig. 1, the gas detection device 10 includes the visible light camera 110 and the infrared camera 120.

However, it is not limited thereto.

The gas detection device 10 may not include the visible light camera 110 and the infrared camera 120.

Instead of including the visible light camera 110 and the infrared camera 120, the gas detection device 10 may be connected to a visible light camera via a cable and may be connected to an infrared camera via another cable.

The gas detection device 10 may receive the visible-light frame image from the visible light camera via the cable. The gas detection device 10 may receive the infrared frame image from the infrared camera via the cable.

(5) In the embodiments, the blur correction processing is not necessarily required, and for example, the main control unit 150 may not include the blur correction unit 153. In this case, step S107 is deleted in the flowchart of Fig. 7.

(6) The embodiments and the modifications may be combined.

Industrial Applicability

The image capturing device according to the present disclosure has an effect of being able to visually recognize an object being captured even in a case where a camera shake amount is large, and is useful as a technique of detecting gas using an image.

Reference Signs List

| | |
|---|---|
| 10 | gas detection device |
| 101 | CPU |
| 102 | ROM |
| 103 | RAM |
| 104 | input circuit |
| 105 | input circuit |
| 106 | output circuit |

107     input and output circuit
108     monitor
109     storage device
110     visible light camera
111     optical system
112     image sensor
113     signal processing circuit
120     infrared camera
121     optical system
122     filter
123     image sensor
124     signal processing circuit
150     main control unit
151     integrated control unit
152     blur amount calculation unit
153     blur correction unit
154     image generation unit
155     blur determination unit

**Claims**

1.  An image capturing device used to detect gas, solid particulates, or liquid particulates floating in a space, the image capturing device comprising:

    a capturing unit;
    a display unit;
    an image generation unit that detects presence of gas, solid particulates, or liquid particulates based on an image generated by the capturing unit and generates a detected image representing gas, solid particulates, or liquid particulates detected;
    an acquisition unit that acquires an index value indexing shaking of the capturing unit at a time of capturing;
    a determination unit that determines whether or not an index value acquired is within a predetermined range; and
    a display control unit that executes control to display, on the display unit, a captured image that is captured by the capturing unit and includes a whole or a part of a capturing target or a processed image generated based on the captured image in a case where it is determined that the index value does not fall within the predetermined range, and executes control to display the detected image on the display unit in a case where it is determined that the index value acquired is within the predetermined range.

2.  The image capturing device according to claim 1, wherein
    in a case where the image capturing device detects gas, the capturing unit includes an infrared capturing unit that generates an infrared image.

3.  The image capturing device according to claim 1, wherein
    in a case where the image capturing device detects solid particulates or liquid particulates, the capturing unit includes a visible-light capturing unit that generates a visible light image.

4.  The image capturing device according to claim 1, wherein
    in a case where the image capturing device detects gas, solid particulates, or liquid particulates, the capturing unit includes an infrared capturing unit that generates an infrared image and a visible-light capturing unit that generates a visible light image.

5.  The image capturing device according to claim 1, wherein

    the capturing unit includes an infrared capturing unit that generates an infrared image,
    the infrared image generated represents a temperature distribution of a capturing target surface,
    the image capturing device further comprising a conversion unit that converts a temperature of each part in the temperature distribution into color information to generate a color image representing a color distribution in a capturing target, wherein
    the display control unit executes control to display the color image as the processed image.

6. The image capturing device according to claim 1, wherein

in a case where the image capturing device detects gas, solid particulates, or liquid particulates, the capturing unit includes a visible-light capturing unit that generates a visible light image and an infrared capturing unit that generates an infrared image,
the image generation unit generates the detected image based on the visible light image or the infrared image,
the image capturing device further comprising a superimposition unit that superimposes the visible light image generated or the infrared image generated and the detected image generated to generate a superimposed image, wherein
the display control unit executes control to display the superimposed image as the processed image.

7. The image capturing device according to claim 1, wherein

the capturing unit generates a first image at a first time point, and generates a second image at a second time point after the first time point, and
the image generation unit generates a difference image between the first image and the second image as the detected image.

8. The image capturing device according to claim 7, wherein

in a case where the image capturing device detects gas, the capturing unit is an infrared capturing unit that generates an infrared image,
the infrared capturing unit generates a first infrared image as the first image at the first time point, and generates a second infrared image as the second image at the second time point, and
the image generation unit generates a difference image between the first infrared image and the second infrared image as the detected image.

9. The image capturing device according to claim 7, wherein

in a case where the image capturing device detects water vapor, solid particulates, or liquid particulates, the capturing unit is a visible-light capturing unit that generates a visible light image,
the visible-light capturing unit generates a first visible light image as the first image at the first time point, and generates a second visible light image as the second image at the second time point, and
the image generation unit generates a difference image between the first visible light image and the second visible light image as the detected image.

10. The image capturing device according to claim 1, wherein

the capturing unit generates moving image data with a structure in which a plurality of frame images are arranged in time series,
data obtained by arranging pixel data of pixels at same pixel positions in a plurality of the frame images in time series is defined as time-series pixel data, and
the image generation unit calculates, for each of a plurality of pieces of the time-series data constituting the moving image data, a standard deviation or a variance in units of a predetermined number of frame images smaller in number than a number of a plurality of the frame images, and generates the detected image using the standard deviation or variance detected.

11. The image capturing device according to claim 10, wherein

in a case where the image capturing device detects gas, the capturing unit is an infrared capturing unit that generates an infrared frame image,
the infrared capturing unit generates the moving image data with a structure in which a plurality of infrared frame images are arranged in time series,
data obtained by arranging pixel data of pixels at same pixel positions in a plurality of the infrared frame images in time series is defined as the time-series pixel data, and
the image generation unit calculates, for each of a plurality of pieces of the time-series data constituting the moving image data, a standard deviation or a variance in units of a predetermined number of infrared frame images smaller in number than a number of a plurality of the infrared frame images, and generates the detected

**EP 4 626 009 A1**

image using the standard deviation or variance detected.

12. The image capturing device according to claim 10, wherein

in a case where the image capturing device detects water vapor, solid particulates, or liquid particulates, the capturing unit is a visible-light capturing unit that generates a visible-light frame image, the visible-light capturing unit generates the moving image data with a structure in which a plurality of visible-light frame images are arranged in time series, data obtained by arranging pixel data of pixels at same pixel positions in a plurality of the visible-light frame images in time series is defined as the time-series pixel data, and the image generation unit calculates, for each of a plurality of pieces of the time-series data constituting the moving image data, a standard deviation or a variance in units of a predetermined number of visible-light frame images smaller in number than a number of a plurality of the visible-light frame images, and generates the detected image using the standard deviation or variance detected.

13. The image capturing device according to claim 1, further comprising

a blur correction unit that corrects a blur in an image generated by the capturing unit using an index value acquired by the acquisition unit to generate a corrected image, wherein the image generation unit generates the detected image, the captured image, or the processed image from the corrected image generated.

14. The image capturing device according to claim 13, wherein

the capturing unit generates a first image at a first time point, the blur correction unit generates a second image aligned with the first image, in which a blur is corrected, at a second time point after the first time point, the acquisition unit calculates, as the index value, a degree of matching between the first image generated and the second image generated, the predetermined range corresponds to a predetermined threshold or more, the determination unit determines whether or not a calculated degree of matching is equal to or larger than the predetermined threshold, and in a case where it is determined that the calculated degree of matching is less than the predetermined threshold, the display control unit executes control to display the captured image or the processed image.

15. The image capturing device according to claim 1, further comprising

an angular velocity sensor that measures a rotation angular velocity of the capturing unit, wherein the acquisition unit calculates, as the index value, a blur amount indicating shaking of the capturing unit using a rotation angular velocity measured by the angular velocity sensor, the predetermined range corresponds to less than a predetermined threshold, the determination unit determines whether or not the blur amount calculated is less than the predetermined threshold, and in a case where it is determined that the blur amount calculated is equal to or larger than the predetermined threshold, the display control unit executes control to display the captured image or the processed image.

16. An image capturing method used in an image capturing device used to detect gas, solid particulates, or liquid particulates floating in a space and including a capturing unit and a display unit, the image capturing method comprising:

an image generation step of detecting presence of gas, solid particulates, or liquid particulates based on an image generated by the capturing unit and generating a detected image representing gas, solid particulates, or liquid particulates detected; an acquisition step of acquiring an index value indexing shaking of the capturing unit at a time of capturing; a determination step of determining whether or not the index value acquired is within a predetermined range; and a display control step of executing control to display, on the display unit, a captured image that is captured by the capturing unit and includes a whole or a part of a capturing target or a processed image generated based on the captured image in a case where it is determined that the index value does not fall within the predetermined range, and executing control to display the detected image on the display unit in a case where it is determined that the index value acquired is within the predetermined range.

17. A computer program for control used in an image capturing device used to detect gas, solid particulates, or liquid particulates floating in a space and including a capturing unit and a display unit, the computer program causing the image capturing device, which is a computer, to perform:

an image generation step of detecting presence of gas, solid particulates, or liquid particulates based on an image generated by the capturing unit and generating a detected image representing gas, solid particulates, or liquid particulates detected;
an acquisition step of acquiring an index value indexing shaking of the capturing unit at a time of capturing;
a determination step of determining whether or not the index value acquired is within a predetermined range; and
a display control step of executing control to display, on the display unit, a captured image that is captured by the capturing unit and includes a whole or a part of a capturing target or a processed image generated based on the captured image in a case where it is determined that the index value does not fall within the predetermined range, and executing control to display the detected image on the display unit in a case where it is determined that the index value acquired is within the predetermined range.

# FIG. 1

**VISIBLE LIGHT CAMERA** (110)
- OPTICAL SYSTEM (111)
- IMAGE SENSOR (112)
- SIGNAL PROCESSING CIRCUIT (113)

**INFRARED CAMERA** (120)
- OPTICAL SYSTEM (121)
- FILTER (122)
- IMAGE SENSOR (123)
- SIGNAL PROCESSING CIRCUIT (124)

**MAIN CONTROL UNIT** (150)
- INTEGRATED CONTROL UNIT (151)
- BLUR AMOUNT CALCULATION UNIT (152)
- BLUR CORRECTION UNIT (153)
- IMAGE GENERATION UNIT (154)
- BLUR DETERMINATION UNIT (155)

- CPU (101)
- ROM (102)
- RAM (103)

- B1
- INPUT CIRCUIT (104)
- INPUT CIRCUIT (105)
- OUTPUT CIRCUIT (106)
- MONITOR (108)
- INPUT AND OUTPUT CIRCUIT (107)

**STORAGE DEVICE** (109)
- INFRARED FRAME IMAGE (201)
- VISIBLE-LIGHT FRAME IMAGE (211)
- CORRECTED FRAME IMAGE (221)
- DETECTED FRAME IMAGE (231)

10

EP 4 626 009 A1

**FIG. 2**

x →

| FIRST PIXEL | 302 SECOND PIXEL | 303 THIRD PIXEL | 304 FOURTH PIXEL | 305 FIFTH PIXEL | 306 | | 301 |
|---|---|---|---|---|---|---|---|
| PIXEL VALUE G 0 | PIXEL VALUE G 10 | PIXEL VALUE G 10 | PIXEL VALUE G 30 | PIXEL VALUE G 40 | ... | | jth ROW OF CURRENT INFRARED FRAME IMAGE |

10    0    20    10    ...    VALUE INDICATING CHANGE IN x-AXIS DIRECTION $\frac{\partial G}{\partial x}$

| FIRST PIXEL | 312 SECOND PIXEL | 313 THIRD PIXEL | 314 FOURTH PIXEL | 315 | | 311 |
|---|---|---|---|---|---|---|
| PIXEL VALUE G 1 | PIXEL VALUE G 10 | PIXEL VALUE G 12 | PIXEL VALUE G 31 | ... | | jth ROW OF NEXT INFRARED FRAME IMAGE |

9    2    19    ...    VALUE INDICATING CHANGE IN x-AXIS DIRECTION $\frac{\partial G}{\partial x}$

OCCURRENCE OF CAMERA SHAKING IN x-AXIS DIRECTION BLUR AMOUNT: 0.1 PIXELS

VALUE INDICATING TEMPORAL CHANGE
BETWEEN jth ROW OF CURRENT INFRARED FRAME IMAGE AND jth ROW OF NEXT INFRARED FRAME IMAGE $\frac{\partial G}{\partial t}$

| FIRST PIXEL | SECOND PIXEL | THIRD PIXEL | FOURTH PIXEL | | | 321 |
|---|---|---|---|---|---|---|
| 1 | 0 | 2 | 1 | ... | | |

322    323    324    325

FIG. 3A

$$SL : Ns = \frac{\partial G}{\partial t} = Sx \cdot \frac{\partial G}{\partial x}$$

FIG. 3B

$$SL : Ns = \frac{\partial G}{\partial t} = Sx \cdot \frac{\partial G}{\partial x}$$

FIG. 3C

FIG. 4

FIG. 5

# FIG. 6

FIRST PIXEL 462 — Kth INFRARED FRAME IMAGE

460

461

Mth PIXEL

FIRST PIXEL 452

451

Mth PIXEL

TIME-SERIES PIXEL DATA OF FIRST PIXEL 471

(K−1)th INFRARED FRAME IMAGE

SECOND INFRARED FRAME IMAGE

TIME-SERIES PIXEL DATA OF Mth PIXEL 481

FIRST PIXEL 442

441

Mth PIXEL

FIRST PIXEL 432 — SECOND PIXEL

431

Mth PIXEL

FIRST INFRARED FRAME IMAGE — (M−1)th PIXEL

EP 4 626 009 A1

# FIG. 7

START

↓

GENERATE INFRARED FRAME IMAGE — S101

WRITE INFRARED FRAME IMAGE — S102

GENERATE VISIBLE-LIGHT FRAME IMAGE — S103

WRITE VISIBLE-LIGHT FRAME IMAGE — S104

READ PLURALITY OF INFRARED FRAME IMAGES — S105

↓

MEASURE BLUR AMOUNT — S106

↓

PERFORM BLUR CORRECTION PROCESSING — S107

↓

GENERATE DETECTED FRAME IMAGE — S108

↓

IS BLUR AMOUNT WITHIN CORRECTABLE RANGE? — S109

NO → READ VISIBLE-LIGHT FRAME IMAGE — S112 → DISPLAY VISIBLE-LIGHT FRAME IMAGE — S113

YES ↓

READ DETECTED FRAME IMAGE — S110

↓

DISPLAY DETECTED FRAME IMAGE — S111

# FIG. 8

501

FIRST FRAME IMAGE

502

P1

511

SECOND FRAME IMAGE

512

P2

## FIG. 9A

## FIG. 9B

## FIG. 10A

631

## FIG. 10B

632

# FIG. 11A

633

# FIG. 11B

634

## FIG. 12A

641

## FIG. 12B

642

*FIG. 13A*

643

*FIG. 13B*

644

*FIG. 13C*

645

*FIG. 14A*

651

*FIG. 14B*

652

*FIG. 14C*

653

*FIG. 15A*

661

*FIG. 15B*

662

*FIG. 15C*

663

# EP 4 626 009 A1

| INTERNATIONAL SEARCH REPORT | International application No. |
|---|---|
| | **PCT/JP2023/032198** |

**A. CLASSIFICATION OF SUBJECT MATTER**

*H04N 23/60*(2023.01)i; *G01M 3/38*(2006.01)i; *G01N 21/27*(2006.01)i; *G01N 21/3504*(2014.01)i; *G03B 5/00*(2021.01)i; *G03B 15/00*(2021.01)i; *G03B 17/02*(2021.01)i; *G06T 7/00*(2017.01)i; *H04N 23/63*(2023.01)i

FI: H04N23/60 500; G06T7/00 610B; G01N21/3504; G01N21/27 A; G03B5/00 K; G03B15/00 T; G03B17/02; H04N23/63; G01M3/38 H

According to International Patent Classification (IPC) or to both national classification and IPC

**B. FIELDS SEARCHED**

Minimum documentation searched (classification system followed by classification symbols)

H04N23/60; G01M3/38; G01N21/27; G01N21/3504; G03B5/00; G03B15/00; G03B17/02; G06T7/00; H04N23/63

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-515857 A (SONY CORP.) 14 June 2018 (2018-06-14) <br> paragraphs [0009]-[0103], fig. 1-6 | 1-17 |
| A | JP 2017-90190 A (KONICA MINOLTA, INC.) 25 May 2017 (2017-05-25) <br> paragraphs [0026]-[0070], fig. 1-7 | 1-17 |
| A | JP 2016-170029 A (KONICA MINOLTA, INC.) 23 September 2016 (2016-09-23) <br> paragraphs [0017]-[0075], fig. 1-12 | 1-17 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 October 2023** | **14 November 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/032198**

| Patent document cited in search report | | | Publication date (day/month/year) | Patent family member(s) | | | Publication date (day/month/year) |
|---|---|---|---|---|---|---|---|
| JP | 2018-515857 | A | 14 June 2018 | US | 2016/0239967 | A1 | |
| | | | | paragraphs [0014]-[0108], fig. 1-6 | | | |
| | | | | WO | 2016/133741 | A1 | |
| | | | | KR | 10-2017-0104553 | A | |
| | | | | CN | 107431784 | A | |
| JP | 2017-90190 | A | 25 May 2017 | (Family: none) | | | |
| JP | 2016-170029 | A | 23 September 2016 | (Family: none) | | | |

Form PCT/ISA/210 (patent family annex) (January 2015)

**REFERENCES CITED IN THE DESCRIPTION**

**Patent documents cited in the description**

- JP 6838605 B

- JP 6245418 B